# EUROPÄISCHE PATENTSCHRIFT

(11) **EP 1 733 239 B1**
(45) Veröffentlichungstag und Bekanntmachung des Hinweises auf die Patenterteilung: **16.11.2011**
(21) Anmeldenummer: 05714725.8
(22) Anmeldetag: 30.03.2005
(51) Int. Cl.: G01N 35/04

(54) **VORRICHTUNG UND VEFAHREN ZUM IDENTIFIZIEREN, ORTEN UND VERFOLGEN VON OBJEKTEN AUF LABOREINRICHTUNGEN**
DEVICE AND METHOD FOR IDENTIFYING, LOCATING AND TRACKING OBJECTS ON LABORATORY EQUIPMENT
DISPOSITIF ET PROCEDE D'IDENTIFICATION, DE LOCALISATION ET DE POURSUITE D'OBJETS SITUES SUR DES EQUIPEMENTS DE LABORATOIRE

(30) Priorität: 07.04.2004 US 560335 P; 28.04.2004 CH 748042004
(43) Veröffentlichungstag der Anmeldung: 20.12.2006
(73) Patentinhaber: Tecan Trading AG, 8708 Männedorf (CH)
(72) Erfinder: INGENHOVEN, Nikolaus, CH-8713 Uerikon (CH); GRÄTER, Matthias, 8712 Stäfa (CH)
(74) Vertreter: OK pat AG
(86) Internationale Anmeldenummer: PCT/CH2005/000183
(87) Internationale Veröffentlichungsnummer: WO 2005/098455

(56) Entgegenhaltungen:
- WO-A-03/101022
- WO-A1-00/36974
- WO-A2-01/95242
- DE-A- 10 058 237
- US-A- 6 127 928
- US-A1- 2002 017 602
- US-A1- 2002 030 598
- US-A1- 2002 065 039
- US-A1- 2002 151 077
- US-B1- 6 429 016
- US-B1- 6 451 259

## Beschreibung

Die vorliegende Erfindung betrifft eine Vorrichtung und Verfahren zum Identifizieren, Orten und Verfolgen von Objekten auf Laboreinrichtungen unter Verwendung eines computergesteuerten Radiofrequenzidentifikations- (RFID) Systems und Radiofrequenzidentifikations- (RFID) Etiketten oder "RFID tags", welche an solchen Objekten befestigt sind.

Die unterschiedlichsten Industriezweige verlangen nach automatisierten Systemen zum Bewegen von Gütern auf bzw. zwischen Arbeitsstationen. Genauer gesagt handelt es sich um Positionierungssysteme zum präzisen Platzieren der Güter bei jeder Arbeitsstation, welche eine Vorrichtung zum Manipulieren der Güter an einer bestimmten Arbeitsstation umfasst. Zum Beispiel werden in der pharmazeutischen Forschung oder in der klinischen Diagnostik mehrere Arten von automatisierten Systemen verwendet. Dabei handelt es sich jeweils um konventionelle Ansätze, die im wesentlichen immer eine Verfahrensvariante zum Bewegen von Flüssigkeiten oder trockenen Präparaten von einem Behälter zu einem anderen darstellen. Zudem werden diese Präparate mit bekannten Methoden, wie z.B. optischen Messungen, Umpipettieren, Waschen, Inkubieren und Filtrieren untersucht bzw. behandelt.

Solche bekannten automatischen Systeme gleichen sich, indem Probentransfer und Probenmanipulation mittels sogenannten "Arbeitsstationen" bzw. speziellen Anlagen ausgeführt werden. Diese Arbeitsstationen können einzeln manuell oder zusammengeschaltet zu einem automatisierten System betrieben werden. Bei automatischen Systemen braucht der Anwender nicht alle einzelnen Behandlungsmetheden auszuführen bzw, vorzusehen. Eine weitere Gemeinsamkeit solcher bekannten Systeme liegt darin, dass Proben oft in standardisierten Mikroplatten bearbeitet werden. Solche Mikroplatten sind in allen möglichen Formaten erhältlich, umfassen aber typischerweise 96 Probengefässe oder "Wells", die in einem regelmässigen 8 x 12 Raster mit einem 9 mm Achsabstand angeordnet sind. Mikroplatten mit einem Vielfachen oder auch nur einem Teil dieser Well-Zahl oder Dichte werden ebenfalls verwendet. Unterschiedliche Arbeitsstationen können durch einen oder mehrere Roboter zum Tragen der Mikroplatten verbunden werden. Einer oder mehrere sich entsprechend einem kartesischen Koordinatensystem bewegende Roboter können zum Arbeiten auf einer Arbeitstischoberfläche verwendet werden. Diese kartesischen Roboter können Platten oder andere Probenbehälter tragen und auch Flüssigkeiten transferieren. Ein zentrales Steuersystem bzw. ein Computer kontrolliert und steuert diese bekannten Systeme, deren hervorragender Vorteil in der kompletten Automatisierung der Arbeitsprozesse liegt. Folglich können solche Systeme über Stunden und Tage betrieben werden, ohne dass ein menschlicher Eingriff notwendig wäre.

Die Verwendung von sogenannten "Plattenstaplern" ermöglicht eine weitere Art von Automaten. So kann beispielsweise ein Ladestapler auf der einen Seite einer Anlage, wie z.B. einem Liquidhandling System oder einem optischen Plattenlesegerät und an dessen anderer Seite ein Ausgabestapler platziert werden. Mikroplatten können dann dem Eingangsbereich des Ladestaplers durch ein Förderband oder einen Roboterarm, z.B. einen sogenannten "Pick-and-Place-Arm" zugeführt werden. Nach dem Beendigen eines Arbeitsschrittes des automatischen Systems wird die Mikroplatte entsprechend auf dem Eingangsbereich des Ausgabestaplers deponiert. Solche Stapler verwenden of herausnehmbare Kassetten, so dass ca. 20 Mikroplatten auf einmal von einem System zum anderen getragen werden können. Dies geschieht zumeist manuell oder mittels eines Gelenkarm-Roboters zum Transferieren der Stapel zwischen den Arbeitsstationen. Die Proben können durch einfaches Einsetzen eines ganzen Stapels in einen Inkubator inkubiert werden. Plattenstapler können auch mit konventionellen Arbeitsstationen kombiniert werden.

Es besteht ein Bedarf in den unterschiedlichsten. Zweigen der Automatisationsindustrie, betreffe diese die pharmazeutische Forschung, die klinische Diagnostik oder auch die Herstellung von solchen Produkten, nach einer Vorrichtung bzw. einem Verfahren zum Orten und Verfolgen von Objekten auf Laboreinrichtungen. Insbesondere betrifft dieser Bedarf ein System bzw. ein Verfahren zum Orten und Verfolgen von Objekten auf einem Arbeitstisch einer Workstation zum Liquidhandling von Proben.

Aus US 6,429,016 ist ein System und ein Verfahren zum Positionieren einer Probe bzw. einer Ladung in Bezug auf eine bestimmte Vorrichtung in einem automatischen System bekannt. Es wird ein zweiteiliger Ansatz offenbart, bei dem ein "Makropositioniersystem" für grössere Probenbewegungen zwischen Arbeitsstationen und ein "Mikropositioniersystem" für die präzise Platzierung der Proben verwendet wird. Das "Makropositioniersystem" beruht auf Robotern, die sich auf bzw. entlang von einem Spur- oder Geleisesystem bewegen und dabei Probenbehälter, wie z.B. eine Mikroplatte tragen. Bei einer gewünschten Arbeitsstation bewirkt das untergeordnete, jeweils zwischen der Arbeitsstation und dem Probenträger angreifende "Mikropositionierungssystem" eine genaue Platzierung der Proben an einer vorbestimmten Stelle der Arbeitsstation. Diese Stelle stimmt überein mit der Ausrichtung eines Gerätes (z.B. einer Pipettier- oder Dispensiervorrichtung), welches mit den Proben in Interaktion treten oder an diesen bestimmte Arbeiten ausführen soll. Wenn ein Roboter an seinem Endbestimmungsort ankommt, wird er dort identifiziert und es wird abgeklärt, ob er sich an der richtigen Position befindet. Zu diesem Zweck kann eine zweiseitige Infrarotverbindung, Nahbereichsradiofrequenz, Radiofrequenzidentifikation (RFID), elektrische Kontakte oder auch ein eindimensionaler oder zweidimensionaler Barcode verwendet werden. Die Komplexität dieses Systems gründet zumindest teilweise auf einer Anzahl von Objekt tragenden Robotern mit jeweils autonomer Navigation. Diesem System wird durch die Tatsache Grenzen gesetzt, dass die Roboter sich entlang eines Spursystems auf der Oberfläche eines Arbeitstisches bewegen. Dadurch wird zumindest ein grosser Teil des von diesem Spursystem beanspruchten Gebietes als "Verkehrsfläche" gesperrt und ist für die Bearbeitung von Proben nicht zugänglich.

Ein Verfahren und eine Vorrichtung zum Orten und Verfolgen von Dokumenten und anderen Objekten sind aus US 6,127,928 bekannt. Es wird ein Radiofrequenzkontrollsystem offenbart, das den Aufbewahrungsort von Dokumenten, wie Büromappen und dergleichen automatisch und schnell auffinden lässt. Ein durch einen Personalcomputer (PC) gesteuerter Zentralübermittler sendet ein codiertes Radiofrequenzsignal (RF Signal) mit einer ersten Frequenz an preisgünstig hergestellte, adressierbare lokale Sender/Übermittler, die auf Büchergestellen oder in Schubladen platziert sind. Diese lokalen, auch sequentiell adressierbaren Sender übertragen das codierte RF Signal mit einer zweiten Frequenz über eine Antenne. Eine passive Radiofrequenzidentifikations- (RFID) Etikette, welche den gleichen Code wie das durch den lokalen Sender übertragene RF Signal enthält, ist z.B. an einem Aktenordner befestigt und nimmt - falls sie in der Nähe der Antenne des lokalen Senders ist - aus dem vom lokalen Sender erzeugten RF Feld Energie auf. Diese aktivierte RFID-Etikette moduliert nun das RF Signal der zweiten Frequenz, worauf dieses modulierte Signal vom Zentralübermittler empfangen wird. Über einen mit dem Zentralübermittler gekoppelten PC wird das System befähigt, die Ortung eines mit einem RFID etikettierten Dokumentordners automatisch und schnell bis zu einer speziellen Schublade oder einem speziellen Büchergestelltablar in einer Büroumgebung auszuführen. Allerdings werden einem Fachmann keinerlei Hinweise offenbart, wie dieses System zum Identifizieren, Orten und Verfolgen von Objekten auf Laboreinrichtungen angepasst werden könnte.

Es ist deshalb eine Aufgabe der vorliegenden Erfindung, ein alternatives System und ein Verfahren zum Identifizieren, Orten und Verfolgen von Objekten auf Laboreinrichtungen vorzuschlagen. Eine weitere Aufgabe der vorliegenden Erfindung liegt darin, ein System und ein Verfahren zum Identifizieren, Orten und Verfolgen von Objekten auf Laboreinrichtungen vorzuschlagen, das zudem einfach funktioniert und zu verwenden ist.

Diese und weitere Aufgaben werden mit den Merkmalen der unabhängigen Ansprüche gelöst. Bevorzugte Verbesserungen und zusätzliche Erfindungsmerkmale ergeben sich aus den abhängigen Ansprüchen.

Die vorliegende Erfindung basiert auf dem folgenden Konzept:

Alle auf einem Arbeitstisch eines Laborgeräts zu platzierenden Objekte, wie z.B. Module, Carrier und Laborartikel werden anfangs mit einer Radiofrequenzidentifikations-(RFID) Etikette ausgestattet. Das erfindungsgemässe System stellt Mittel zum Aktivieren dieser RFID-Etiketten und zum Empfangen der durch diese RFID-Etiketten ausgesendeten Radiofrequenz (RF) Signale bereit.

Anstelle eines (wahrscheinlich viel aufwendigeren) Systems zur ortsauflösenden Identifizierung, welches eine dreidimensionale Anordnung von zumindest drei RFID-Etiketten-Lesegeräten und das Identifizieren der RFID-Etiketten mittels zeitaufgelöster Abfrage und 3D Triangulation umfasst, wird ein einfacheres System vorgeschlagen, welches eine globale Anregung mit einer ortsaufgelösten Anregung kombiniert, auf welche jeweils die Erfassung der anwesenden RFID-Etiketten folgt. Die vorgeschlagene Strategie ist deshalb hervorragend geeignet, eine robuste und ortsaufgeföste Etiketten-Identifikation zu erleichtern.

Es werden Mittel bereitgestellt, die zum Aktivieren aller anwesenden RFID-Etiketten konfiguriert sind, damit alle RF Signale dieser Etiketten gesammelt und - entsprechend der Art der etikettierten Objekte - in Gruppen aufgelistet werden können. Es werden auch derart konfigurierte Mittel bereitgestellt, dass jede einzelne der auf dem Arbeitstisch anwesenden RFID-Etiketten individuell aktiviert werden kann, so dass die aktuelle Position jeder RFID-Etikette in einem gegeben Koordinatengitter auf dem Arbeitstisch des Systems detektiert werden kann.

Durch die Erfindung erreichte Vorteile umfassen:
1. Das Erfassen von möglichen Fehlpositionierungen von Trägern oder Gestellen auf einer Arbeitstischoberfläche, wobei die Fehlpositionierung unabhängig von den Bewegungen oder dem Koordinatensystem eines Roboters erfasst wird;
2. Das Erfassen von möglichen Fehlpositionierungen von generellen Laborartikeln, wie z.B. Mikroplatten oder Probenröhrchen auf den Trägern oder Gestellen;
3. Das Erstellen von Listen der Positionen und Bewegungen entsprechend dem Erfassen von möglichen Fehlpositionierungen von Trägern oder Gestellen (vgl. 1.) und dem Erfassen von möglichen Fehlpositionierungen von generellen Laborartikeln (vgl. 2.), wobei diese Listen unabhängig von den Bewegungen oder dem Koordinatensystem eines Roboters erstellt werden und eine wahre Verteilung der aktuellen Positionen darstellen;
4. Das Integrieren der Verteilung gemäss 3. in übergeordnete logistische Systeme, welche z.B. chemische Bibliotheken, Stapler, Inkubatoren, Analysegeräte, Zentrifugen, Abbildungssysteme usw. umfassen;
5. Das präzise Fixieren von Mikroplattenträgern und von Röhrchengestellen auf einer glatten Arbeitstischoberfläche, falls auf mechanische Befestigungselemente verzichtet wird;
6. Die Möglichkeit, eine komplett flache und glatte Arbeitstischoberfläche zu verwenden, welche einfach zu reinigen und zu desinfizieren ist, falls auf mechanische Befestigungselemente verzichtet wird;
7. Die räumliche Auflösung der Positionserfassung und der Bewegung der Träger (Carrier) oder Gestelle (Racks) wie auch der allgemeinen Laborartikel, wie Mikroplatten und Probenröhrchen ist wesentlich höher als bei aus dem Stand der Technik bekannten Systemen;
8. Es ist nicht notwendig, die aktuelle Position der lokalen Anreger der RFID-Etiketten zu kennen, wie dies aus dem Stand der Technik bekannt ist. Die aktuelle Position eines lokalen Anregers kann automatisch erfasst werden;
9. Die erfindungsgemässe Verwendung von RFID-Etiketten (tags) ist vollständig kompatibel mit der gleichzeitigen bzw. simultanen Verwendung von anderen Identifikationssystemen, wie z.B. Barcodes.

Das System bzw. das Verfahren gemäss der vorliegenden Erfindung wird nun an Hand von schematischen und beispielhaften Zeichnungen näher erläutert. Dabei sollen diese Zeichnungen den Umfang der vorliegenden Erfindung nicht einschränken. Es zeigen
- Figur 1: eine Draufsicht auf einen Arbeitstisch einer Laboreinrichtung, in welcher das erfindungsgemässe System mit einer ersten und zweiten Gittervariante entsprechend einer zweiten Ausführungsform implementiert ist;
- Figur 2: einen vertikalen Teilschnitt durch den Arbeitstisch der Laboreinrichtung gemäss Figur 1;
- Figur 3A: einen vertikalen Teilschnitt durch eine lokale Einheit, die als Träger für eine Mikroplatte implementiert ist;
- Figur 3B: einen vertikalen Teilschnitt durch eine lokale Einheit, die als Gestell für Probenröhrchen implementiert ist;
- Figur 4A: ein erstes erfindungsgemässes Kommunikationsschema (I);
- Figur 4B: ein zweites erfindungsgemässes Kommunikationsschema (II).

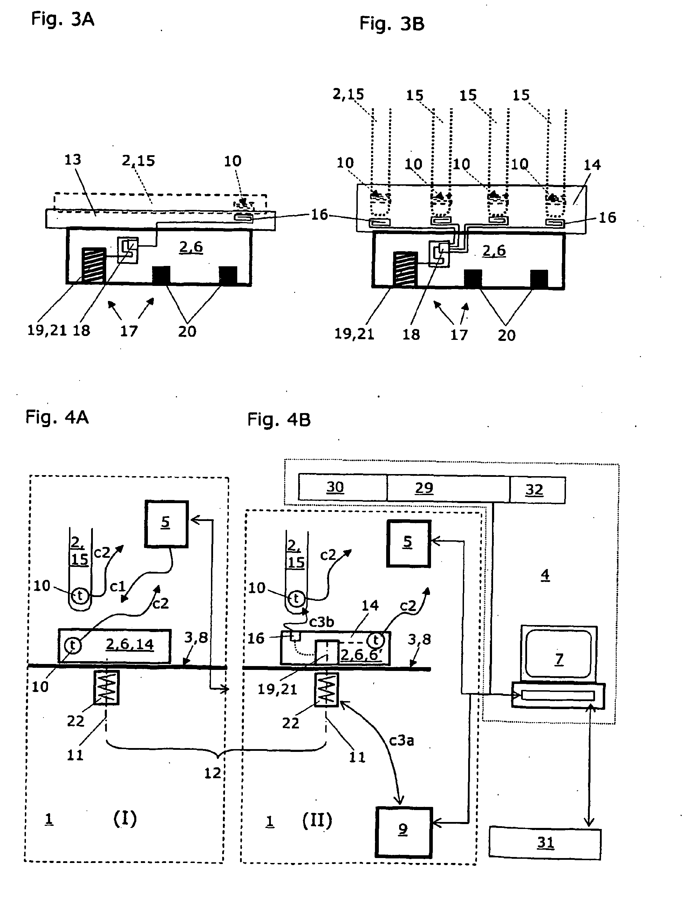

In einer ersten erfindungsgemässen Ausführungsform wird ein System 1, wie im Anspruch 1 definiert bereitgestellt, welches zum Identifizieren und Orten bzw. zum Verfolgen von Objekten 2 dient; die auf einem Arbeitstisch 3 positioniert werden können. Der Arbeitstisch 3 ist Teil einer Laboreinrichtung 4, die als robotisierter Probenprozessor (robotic sample processor = RSP), wie z.B. ein Pipetiergerät zum Ansaugen und Abgeben von Flüssigkeiten oder ein Dispenser zum Abgeben von Flüssigkeiten, ausgebildet ist. Das System 1 umfasst zumindest einen Zentralübermittler 5, der fähig ist, Radiofrequenz (RF) Signale zu senden und zu empfangen. Der Zentralübermittler 5 der ersten Ausführungsform ist zudem fähig, empfangene RF Signale zu konvertieren und diese konvertierten Signale an einen Computer 7 des Systems 1 zu übermitteln. Das System 1 umfasst zumindest eine lokale Einheit 6, welche auf einer Oberfläche 8 des Arbeitstisches 3 montiert ist und welche zum Empfangen und Senden von RF Signalen befähigt ist. Das System 1 umfasst Radiofrequenzidentifikations- (RFID) Etiketten zum Befestigen an der lokalen Einheit 6 und an Laborartikeln 15, die identifiziert und lokalisiert oder verfolgt werden sollen. Das System 1 umfasst zumindest (wie schon bemerkt) einen Arbeitstisch 3 einer Laboreinrichtung 4 sowie einen Computer 7, der mit der Laboreinrichtung 4 verbunden werden kann und der mit dem Zentralübermittler 5 über eine Schnittstelle verbunden ist. Der Computer 7 ist fähig, mit dem Zentralübermittler 5 zu kommunizieren, von dem letzteren erhaltene Signale zu verarbeiten und ausgewählte RFID-Etiketten 10 über den Zentralübermittler 5 anzuwählen. Mit dieser Mindestausrüstung kann die Anwesenheit eines einzelnen Laborartikels 15 (z.B. einer Mikroplatte) sowie der Aufenthaltsort und die Bewegungen von Laborartikeln 15 (z.B. Probenröhrchen) festgestellt werden, wobei diese Laborartikel 15 auf einem einzelnen Träger 13 oder Gestell 14 zu deren Aufnahme platziert werden. Die Kommunikation zwischen dem Zentralübermittler 5 und den RFID-Etiketten 10 kann entsprechend dieser ersten Ausführungsform (nicht im Detail gezeigt) erfolgen, indem ausschliesslich RF Signale verwendet werden (z.B. entsprechend dem Kommunikationsschema I in Fig. 4A). Die Funktion dieser ersten, einfachen Ausführungsform wird jedem Fachmann nach dem Lesen der folgenden Beschreibung der zweiten Ausführungsform (die auch in den Zeichnungen gezeigt ist) klar werden. Es wird bemerkt werden, dass RFID-Etiketten 10, die zum Senden von komplexeren Informationen befähigt sind, für diese erste Ausführungsform verwendet werden müssen; wobei solche komplexeren Informationen zumindest eine einmalige Identifikation und/oder Daten umfassen, die den Typ der Laborartikel 15 angeben, an welche sie befestigt sind. Mit dieser Minimalausrüstung können Informationen über die Identität und Anzahl der Laborartikel 15 sowie über die Position einer einzelnen Mikroplatte erhalten werden. Allerdings kann ohne den Einsatz zusätzlicher Mittel, wie z.B. Lichtschranken an den Einsteckorten, nur die Identifikation aber nicht die Lokalisierung einer Vielzahl von Laborartikeln 15 (z.B. Probenbehältern) erreicht werden.

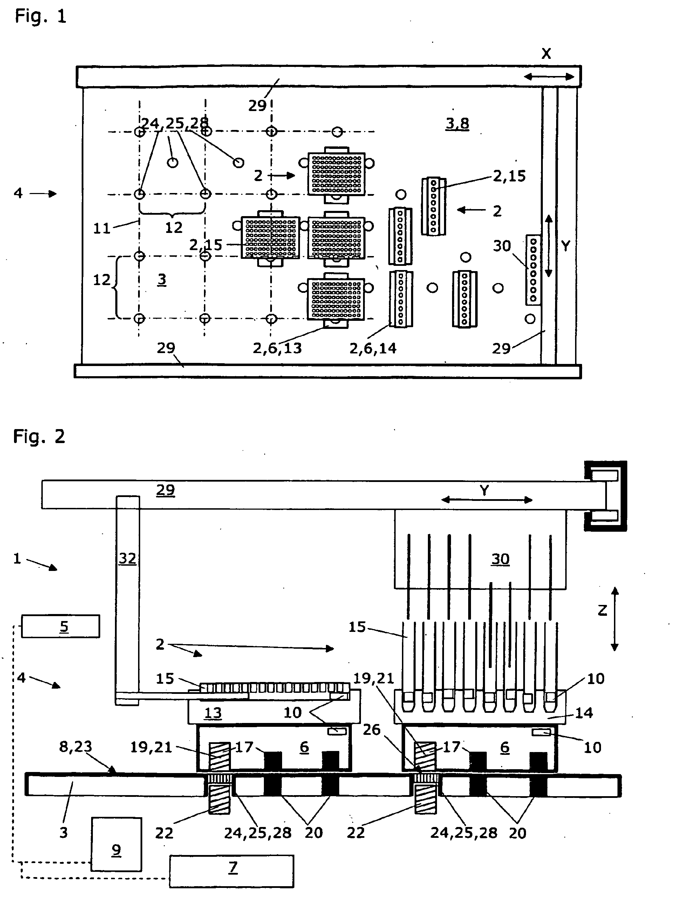

Figur 1 zeigt eine Draufsicht auf einen Arbeitstisch 3 einer Laboreinrichtung 4, in welcher das erfindungsgemässe System 1 mit einer ersten und zweiten Gittervariante entsprechend einer zweiten Ausführungsform der Erfindung implementiert ist. Die gezeigte Laboreinrichtung 4 ist als robotisierter Probenprozessor (robotic sample processor = RSP) ausgebildet und umfasst den Arbeitstisch 3 und Robotarme 29 zum Bewegen eines Pipetiergerätes 30 über im wesentlichen den ganzen Arbeitsbereich auf dem Arbeitstisch 3. Die Laboreinrichtung 4 ist als Pipetiergerät zum Ansaugen und Abgeben von Flüssigkeiten oder als ein Dispenser zum Abgeben von Flüssigkeiten, ausgebildet. Andere Probenhandler umfassen Stapler oder Inkubatoren für Laborartikel 15 wie Mikroplatten; Wägesysteme für Laborartikel 15; Zentrifugen für Laborartikel 15 wie Mikroplatten oder Probenröhrchen; Lese- oder Abbildungsgeräte und alle anderen Instrumente zum Durchführen von Kontrollen oder Manipulationen an Proben. Der abgebildete Arbeitstisch 3 dehnt sich in einer Längen- (X) und in einer Quer- (Y) Richtung aus, wobei diese beiden Richtungen einen rechten Winkel einschliessen. Verschiedene Arbeits- oder Aufbewahrungsbereiche einer bestimmten Arbeitsstation oder sogar unterschiedlicher Arbeitsstationen können mit einem oder mehreren Robotermanipulatoren 32, wie z.B. Plattenträgerrobotern (vgl. Fig. 2) oder anderen robotisierten Transporteinrichtungen, wie z.B. Förderband-oder Schienensystemen usw., untereinander verbunden werden.

Objekte 2 sind oder werden auf dem Arbeitstisch 3 der Laboreinrichtung 4 positioniert. Im Zusammenhang mit der vorliegenden Erfindung umfassen solche Objekte 2 lokale Einheiten 6, die an der Oberfläche 8 des Arbeitstisches 3 befestigt werden können. Die lokalen Einheiten 6 sind so konzipiert, dass sie Energie von Aktivierungseinheiten 9 (nicht gezeigt in Fig. 1; vgl. Fig. 2) empfangen können, dass sie Radiofrequenz (RF) Signale aussenden können, und dass sie eine Anzahl von Radiofrequenzidentifikations- (RFID) Etiketten 10 (vgl. Fig. 2) anwählen und aktivieren können. Hier sind die lokalen Einheiten 6 in Träger (Carriers) 13 integriert. Im Zusammenhang mit der vorliegenden Erfindung umfassen solche Laborartikel 15 Behälter für Proben, wie z.B. flüssige Proben in Probenröhrchen oder in Mikroplatten von allen möglichen Dimensionen (z.B., vorzugsweise Mikroplatten mit 96, 384 oder 1536 Wells) und allen möglichen Volumina. Der Arbeitstisch 3 der Laboreinrichtung 4 ist mit zumindest einer anwählbaren Aktiviereinheit 9 zum Aktivieren der lokalen Einheiten 6 ausgerüstet (nicht gezeigt in Fig. 1; vgl. Fig. 2). Der Arbeitstisch 3 umfasst ein virtuelles Gitter 11, welches zum Einteilen der Arbeittischoberfläche 8 in Gittereinheiten 12 ausgebildet ist. Gemäss einer ersten Variante der vorliegenden Erfindung ist dieses Gitter 11 ein kartesisches Koordinatensystem, wie dieses durch die Linien markiert wird (vgl. Fig. 1), welche durch das Zentrum von in der Abdeckung 23 des Arbeitstisches 3 angeordneten Durchgangslöchern 24 verlaufen. Sollte ein Gitter 11 mit kleineren Gittereinheiten 12 definiert werden, so könnte die Distanz zwischen den Durchgangslöchern 24 reduziert werden. Alternativ dazu und gemäss einer zweiten Variante, könnte das Gitter 11 in Bezug auf die Längsseite X und die Querseite Y des Arbeitstisches 3 verkippt werden. Der Kippwinkel dieser zweiten Variante des Gitters 11 beträgt vorzugsweise 45°. Gemäss einer zusätzlichen Alternative würden die beiden Varianten des Gitters 11 kombiniert, wie dies links oben in Fig. 1 gezeigt ist.

Abweichend von der bisher gezeigten Abdeckung 23 aus Stahl mit den Durchgangslöchern 24, könnte eine Abdeckung 23 aus Kunststoff (oder zumindest eine Oberflächenschicht 27 aus Kunststoff) mit oder ohne lichtdurchlässige Portionen an Stelle der Durchgangslöcher 24 verwendet werden, um darauf Objekte 2 zu positionieren. Eine weitere Möglichkeit betrifft die Verwendung einer Abdeckung 23 aus Aluminium ohne Durchgangslöcher 24. Auf jeden Fall wird bevorzugt, dass die Oberfläche 8 des Arbeitstisches 3 so glatt wie möglich ausgebildet ist, damit die an den Gebrauch des Arbeitstisches 3 anschliessende Reinigung und Desinfektion auf einfache Weise ausgeführt werden kann. Chemisch inerte Oberflächen 8 des Arbeitstisches 3, solche die Materialen wie Stahl, Kunststoff oder Aluminium umfassen, werden bevorzugt. Falls z.B. Stopfen 25 verwendet werden, um die Durchgangslöcher 24 zu verschliessen bzw. optisch durchsichtige Portionen 28 an deren Stelle, so ist vorzugsweise sowohl die Stopfenoberfläche 26 als auch die Oberfläche der optisch durchsichtige Portionen 28 oberflächenbündig mit der Oberfläche 8 des Arbeitstisches 3 damit eine glatte und ebene Arbeitstischoberfläche 8 erzielt wird. Falls ein Arbeitstisch 3 mit einer komplett flachen Oberfläche verwendet wird, so ist die Abdeckung 23 des Arbeitstisches 3 bevorzugt durchlässig für alle möglichen elektromagnetischen Wellen, die für die Aktivierung der lokalen Einheiten 6 verwendet werden.

Figur 2 zeigt einen vertikalen Teilschnitt durch den Arbeitstisch 3 der Laboreinrichtung gemäss Figur 1. Es wird ein System 1 zum Identifizieren und Orten oder zum Verfolgen von Objekten 2 gezeigt, die auf dem Arbeitstisch 3 einer Laboreinrichtung 4 positioniert werden können. Dieses System 1 umfasst zumindest einen Arbeitstisch 3 einer Laboreinrichtung 4, einen Zentralübermittler 5, zumindest eine lokale Einheit 6, einen Computer 7, zumindest eine anwählbare Aktiviereinheit 9, RFID-Etiketten 10 und ein aus Gittereinheiten 12 bestehendes Gitter 11.

Objekte 2, Laborartikel 15 (z.B. Probenröhrchen oder Mikroplatten) Träger 13 und Gestelle 14 eingeschlossen, werden auf dem Arbeitstisch 3 dieser Laboreinrichtung 4 positioniert. RFID-Etiketten werden bzw. sind an diesen Objekten 2 befestigt. Mittels Aktivierung dieser RFID-Etiketten 10 können diese Objekte 2 identifiziert und deren aktuelle Position auf dem Arbeitstisch 3 geortet werden. Falls die Identifizierung und die Lokalisierung eines Objekts 2 vor und nach dem Bewegen eines Objekts 2 durchgeführt wird, so können alle Bewegungen dieses Objekts 2 auf der Oberfläche 8 des Arbeitstisches 3 verfolgt werden. Somit können alle Objekte identifiziert, lokalisiert und verfolgt werden, weil sie eine aktivierbare RFID-Etikette 10 tragen und weil ihre Position in Bezug auf das Gitter 11 festgestellt werden kann.

Einfache RFID-Etiketten 10 können gerade zum Senden eines standardisierten RF Signals befähigt sein. Es wird jedoch bevorzugt, dass die RFID-Etiketten 10 fähig sind, eine individuelle Identifikation, z.B. in Form eirier Meldung, die den Typ des zu lokalisierenden Objekts 2 anzeigt, zu senden. Besonders bevorzugte, spezielle RFID-Etiketten 10 senden eine individuelle (einmalige) Identifikation, welche zudem die Art und Geschichte der Probe angibt, welche sich in dem Laborartikel 15 mit dieser speziellen Etikette 10 befindet. Speziell bevorzugte RFID-Etiketten 10 umfassen alle Eigenschaften von heutigen und zukünftigen, kommerziell erhältlichen RFID-Etiketten oder "RFID-tags". Von besonderem Interesse sind wiederbeschreibbare RFID-Etiketten 10.

Der Arbeitstisch 3 der Laboreinrichtung 4 umfasst ein Gitter 11, welches die Oberfläche 8 des Arbeitstisches 3 in Gittereinheiten 12 unterteilt (vgl. Fig. 1). Der Arbeitstisch 3 umfasst zudem Sendeelemente 22 zum Übermitteln von Energie an die Empfangselemente 19, welche in die lokalen Einheiten 6 integriert sind. Diese Sendeelemente 22 definieren durch ihre Position bzw. durch ihre aktuelle Anordnung unterhalb der Oberfläche 8 des Arbeitstisches 3 die Gitterschnittpunkte des Gitters 11.

Das System 1 umfasst in der zweiten Ausführungsform (vgl. erstes Kommunikationsschema I in Fig. 4A) einen Zentralübermittler 5, der über eine Schnittstelle mit einem Computer 7 verbunden ist und der fähig ist, Radiofrequenz (RF) Signale zu senden und zu empfangen. Vorzugsweise ist der Zentralübermittler 5 zudem befähigt, zumindest eine sich auf dem Arbeitstisch 3 befindende lokale Einheit 6 anzusteuern. Gemäss der zweiten Ausführungsform sind diese lokalen Einheiten 6 im Stande, auf einer Oberfläche 8 des Arbeitstisches 3 befestigt zu werden und geeignet, Energie von zumindest einer Aktiviereinhelt 9 zu empfangen. Der Zentralübermittler 5 ist zudem fähig, die empfangenen RF Signale zu konvertieren und diese umgewandelten Signale an einen Computer 7 zu übermitteln. Der Computer 7 ist mit der Laboreinrichtung 4 verbindbar und er ist über eine Schnittstelle sowohl mit dem Zentralübermittler 5 als auch mit Aktiviereinheiten 9 verbunden. Der Computer 7 ist fähig, mit dem Zentralübermittler 5 zu kommunizieren, vom letzteren empfangene Signale zu verarbeiten und ausgewählte Aktiviereinheiten anzusteuern.

Das Fixieren der lokalen Einheiten 6 auf der Arbeitstischoberfläche 8 der Laboreinrichtung 4 wird vorzugsweise ohne irgendwelche Oberflächenänderungen des Arbeitstisches 3 ermöglicht, also z.B. ohne Einkerbungen, Schienen, Zapfen oder dergleichen, die sich in oder auf der Abdeckung 23 des Arbeitstisches 3 befinden könnten. Deshalb erfolgt die Montage von lokalen Einheiten 6 auf einem im wesentlichen flachen Arbeitstisch 3 bevorzugt mittels Positioniervorrichtungen 17, die Teil der lokalen Einheiten 6 sind. Diese Positioniervorrichtungen 17 sind vorzugsweise als Magnete oder Magnetvorrichtungen 20 ausgebildet, die Permanent- und/oder Elektromagneten umfassen können. Die Positioniervorrichtungen 17 können ein Empfangselement 19 und/oder ein Mikropositionierelement 21 umfassen. Die Mikropositionierelemente 21 können auch separat von den bereits erwähnten Positioniervorrichtungen 17 in die lokalen Einheiten 6 eingebaut sein. Die lokalen Einheiten 6 sind zudem im Stande, RF Signale zu senden und eine Anzahl RFID-Etiketten 10 anzusteuern und zu aktivieren.

Wie bereits erläutert, ist die gezeigte Laboreinrichtung 4 als robotisierter Probenprozessor (RSP) ausgebildet, welche den Arbeitstisch 3 und Robotarme 29 umfasst, mit welchen ein Pipetiergerät 30 über im wesentlichen den ganzen Arbeitsbereich auf dem Arbeitstisch 3 bewegt werden kann. Der Arbeitstisch 3 dehnt sich hier in einer Längsrichtung (X) und in einer Querrichtung (Y) aus, wobei diese zwei Richtungen einen rechten Winkel einschliessen (vgl. Fig. 1). Das Pipetiergerät 30 oder zumindest am Pipetiergerät 30 befestigte Pipettennadeln oder Pipettenspitzen sind in einer Z-Richtung bewegbar, wobei diese Z-Richtung im wesentlichen senkrecht auf dem sich in X- und Y-Richtung ausdehnenden Arbeitstisch 3 steht. Unterschiedliche Arbeits- oder Aufbewahrungsbereiche einer bestimmten Arbeitsstation oder sogar mehrere unterschiedliche Arbeitsstationen können mittels eines oder mehrerer Robotermanipulatoren 32, wie z.B. Plattenträgerroboter (vgl. Fig. 2) oder mittels anderer Transportvorrichtungen, wie Förderbänder- oder Schienensystemen usw. untereinander verbunden werden.

Die lokalen Einheiten 6 sind bevorzugt in Träger 13 oder Gestelle 14 integriert. Jedes der Träger 13 oder Gestelle 14 kann zum Identifizieren eines individuellen, in diesem Träger 13 oder Gestell 14 aufgenommenen Laborartikels 15 mit zumindest einer Antenne 16 ausgestattet sein. Die zumindest eine, durch das System 1 bereit gestellte, anwählbare Aktiviereinheit 9 wird via die Sendeelemente 22 für die Aktivierung der lokalen Einheiten 6 eingesetzt.

Das System 1 umfasst auch einen Zentralübermittler 5, welcher über eine Schnittstelle mit dem Computer 7 verbunden ist und welcher befähigt ist, RF Signale von zumindest einer, sich auf dem Arbeitstisch 3 befindenden, lokalen Einheit 6 zu empfangen. Zudem kann der Zentralübermittler 5 RF Signale der RFID-Etiketten 10 empfangen, welche an den Laborartikeln 10 befestigt sind. Diese lokalen Einheiten 6 können auf der Oberfläche 8 des Arbeitstisches 3 befestigt werden und können Energie von den Aktiviereinheiten 9 beziehen. Dabei wird dieser Energiebezug der lokalen Einheiten 6 vorzugsweise mit der Identifizierung von einzelnen lokalen Einheiten 6 kombiniert. Die Identifizierung einer bestimmten lokalen Einheit 6 kann durch das Feststellen der Anwesenheit dieser lokalen Einheit 6 auf Grund ihrer Energieaufnahme an einer bestimmten Stelle des Gitters 11 ausgeführt werden. Zudem wird eine individuelle Identifikation ausgeführt, indem diese lokale Einheit 6 dem elektrischen Stromkreis, mit welchem Energie über das Sendeelement 22 und das Empfangselement 19 zu dieser lokalen Einheit 6 gelangt, eine modulierte Frequenz überlagert wird. Diese Frequenzmodulation ist vorzugsweise typisch für eine bestimmte Stelle auf dem Gitter 11.

Alternativ dazu kann die Identifikation einer bestimmten lokalen Einheit 6 durch das Aussenden von RF Signalen erfolgen, welche durch eine an dieser lokalen Einheit befestigte RFID-Etikette 10 erzeugt werden. In diesem Fall wird die RFID-Etikette 10 über das Sendeelement 22 und das Empfangselement 19 aktiviert, wobei diese in Wirkkontakt an einer bestimmten Stelle des Gitters 11 stehen, und wobei das Empfangselement 19 mit der RFID-Etikette 10 der lokalen Einheit 6 elektrisch verbunden ist. Vorzugsweise wird eine integrierte Schaltung 18 bereitgestellt, mit welcher die der RFID-Etikette 10 der lokalen Einheit 6 zu liefernde Aktivierungsenergie kontrolliert wird.

Figur 3A zeigt einen vertikalen Teilschnitt durch eine lokale Einheit 6, die als Träger 13 für eine Mikroplatte implementiert ist. Die lokale Einheit 6 umfasst wiederum Positionierungsmittel 17, wie diese in Fig. 2 gezeigt sind, und wie diese bereits als Magnete oder Magnetmittel 20 beschrieben worden sind. Die Positionierungsmittel 17 umfassen hier ein Empfangselement 19 und zwei Magnete 20.

Das Empfangselement 19 ist als Induktionsspule ausgebildet, welche durch ein elektromagnetisches Feld des Sendeelements 22 aktivierbar ist, wobei das Sendeelement 22 als elektromagnetische Spule ausgebildet ist (nicht im Detail gezeigt). Jedes Sendeelement 22 wird unterhalb der Oberfläche 8 des Arbeitstisches 3 und in einer in Bezug auf das Gitter 11 definierten Position angeordnet. Wenn das Empfangelement 19 einer lokalen Einheit 6 im Register mit einem Sendeelement 22 angeordnet wird (vgl. Fig. 2), so erzeugt das elektromagnetische Feld des Sendeelements 22 einen elektrischen Fluss im Empfangselement 19 mittels elektrischer Induktion. Aus diesem Grund kann auf das Anordnen von irgendwelchen Steckern zum Übertragen von elektrischem Strom auf die lokalen Einheiten 6 verzichtet werden, so dass die Oberfläche 8 des Arbeitstisches 3 flach gehalten werden kann. Selbstverständlich muss die Abdeckung 23 des Arbeitstisches 3 oder zumindest der Stopfen 25, der ein Durchgangsloch 24 verschliesst, durchlässig für das magnetische Feld des Sendeelements 22 sein.

Alternativ dazu kann das Empfangselement 19 als ein optisches Element ausgebildet sein, welches Lichtenergie empfangen und diese in elektrische Energie umwandeln kann. In diesem Fall wäre das unterhalb der Abdeckung 23 des Arbeitstisches 3 und in definierter Position in Bezug auf das Gitter 11 angeordnete Sendeelement 22 als optisches Sendeelement ausgebildet, wie z.B. als eine Laserdiode mit grosser Leistung. Selbstverständlich muss die Abdeckung 23 des Arbeitstisches 3, die Oberflächenschicht 27 oder zumindest der Stopfen 25, der ein Durchgangsloch 24 verschliesst, durchlässig für das vom Sendeelement 22 ausgesendete Licht sein.

Das Empfangselement 19 ist in jedem Fall vorzugsweise an eine integrierte Schaltung 18 angeschlossen, mit welcher eine Antenne 16 verbunden ist. Diese Antenne 16 ist so angeordnet, dass sich die Antenne 16 - falls z.B. eine Mikroplatte mit einer daran befestigten RFID-Etikette 10 auf einem Träger 13 platziert wird - in der unmittelbaren Nähe der RFID-Etikette des Laborartikels 15 befindet. Deshalb genügen beim Aktivieren des diesen Träger 13 umfassenden Empfangselements 19 bereits schwache RF Signale zum ausschliesslichen Aktivieren der RFID-Etikette 10 des Laborartikels 15, der durch den Träger 13 aufgenommen ist.

Figur 3B zeigt einen vertikalen Teilschnitt durch eine lokale Einheit 6, die als Gestell 14 für Probenröhrchen implementiert ist. Die lokale Einheit 6 umfasst Positioniervorrichtungen 17, welche in Fig. 2 gezeigt und bereits in Form von Magneten oder Magnetvorrichtungen 20 beschrieben wurden. Die Positioniervorrichtungen 17 umfassen hier ein Empfangselement 19 und zwei Magneten 20. Das Empfangselement 19 ist wiederum vorzugsweise verbunden mit einer integrierten Schaltung 18, an welche eine Anzahl Antennen 16 angeschlossen ist. Die Antennen 16 sind so angeordnet, dass sie - falls eine Anzahl Probenröhrchen mit daran befestigten RFID-Etiketten 10 in dem Gestell 14 platziert werden - in unmittelbarer Nähe der jeweiligen Position der RFID-Etiketten 10 dieser Laborartikel 15 zu liegen kommen. Deshalb sind schwache RF Signale, welche durch das Aktivieren des Empfangselements 19 des Gestells 14 erzeugt werden, gerade genügend stark, um nur gerade diejenigen RFID-Etiketten 10 der Laborartikel 15 zu aktivieren, welche auf diesem Gestell 14 angeordnet sind. Vorzugsweise erlaubt die integrierte Schaltung 18 die Auswahl von bestimmten Probenröhrchen.

Für das eindeutige Feststellen der aktuellen Position der Laborartikel 15, d.h. der an diesen Laborartikeln 15 befestigten RFID-Etiketten, ist es absolut notwenig, dass nur eine bestimmte, einzelne RFID-Etikette 10 mittels einer Antenne 16 individuell adressiert und aktiviert wird. Normalerweise gewährleistet die unmittelbare Nähe einer einzelnen RFID-Etikette 10 und einer für dessen Aktivierung bestimmten Antenne 16 eine sicher Übermittlung des RF Signals zu dieser ausgewählten RFID-Etikette 10, so dass alle anderen anwesenden RFID-Etiketten 10 diese Übermittlung nicht erkennen. Ein zusätzliches Abschirmen der individuellen RFID-Etiketten 10 und/oder Antennen 16 (z.B. durch das Verwenden von Aluminiumfoliestücken) kann die Zuverlässigkeit des Empfangs noch verbessern.

Aus Gründen der vereinfachenden Darstellung auf den Zeichnungen, sind nur vier Probenröhrchen in Fig. 3B gezeigt. Hingegen können eine gebräuchliche Anzahl, wie z.B. 1, 2 oder ein Mehrfaches davon, wie 8, 12, 15, 24, oder n Probenröhrchen durch entsprechend eingerichtete Gestelle 14 aufgenommen werden. Die Mikropositionierelemente 21 können in den lokalen Einheiten 6 als Teil des Empfangselements 19 eingebaut sein. Um sogar kleine Abweichungen von der idealen Position feststellen zu können, werden vorzugsweise speziell angeordnete Magnete oder Lichtschranken eingesetzt. Jeder Fachmann weiss, wie er geeignete Typen solcher Mikropositionierelemente 21 (nicht gezeigt) auswählen soll, damit eine empfindliche Detektion der Abweichung von der exakten Registeranordnung zwischen Empfangselement 19 und Sendeelement 22 vorgenommen werden kann.

Die Mikropositionierelemente 21 können in den lokalen Einheiten 6 als Teil der Magnetvorrichtung 20 eingebaut sein. Um sogar kleine Abweichungen von der idealen Position feststellen zu können, werden vorzugsweise speziell angeordnete Magnete eingesetzt. Jeder Fachmann weiss, wie er geeignete Typen solcher Magnete (nicht gezeigt) auswählen soll, damit eine empfindliche Detektion der Abweichung von der exakten Registeranordnung zwischen den Magneten 20 der lokalen Einheit 6 und den Magneten 20 des Arbeitstisches 3 vorgenommen werden kann.

Die Mikropositionierelemente 21 können in den lokalen Einheiten 6 sowohl separat von dem Empfangselement 19 als auch separat von den Magneten 20 eingebaut sein. Für diese Variante werden Lichtschranken speziell bevorzugt (nicht gezeigt).

Falls RFID-Etiketten 10 an den lokalen Einheiten 6 befestigt werden, so sind diese ebenfalls im Stande, RF Signale an den Zentralübermittler 5 zu senden. Unter Verwendung der Antennen 16 sind die lokalen Einheiten 6 fähig, eine Anzahl ausgewählter RFID-Etiketten 10 von sich auf dem Träger 13 dieser lokalen Einheit 6 befindenden Laborartikeln 15 individuell anzusprechen und zu aktivieren.

Figur 4A zeigt ein erstes erfindungsgemässes Kommunikationsschema (I). Dieses Kommunikationsschema I wird zur generellen Identifikation verwendet, so dass eine Liste zusammengestellt werden kann, in der die auf dem Arbeitstisch 3 eines Laborgerätes 4 vorhandenen Objekte 2 in Klassen mit Gestellen 14, Laborartikeln 15 und Proben unterteilt sind. Der Zentralübermittler 5 ist im Stande, RF Signale unter Verwendung eines ersten Kommunikationskanals (c1) auszusenden und RF Signale unter Verwendung eines zweiten Kommunikationskanals (c2) zu empfangen.

Im Zusammenhang mit der vorliegenden Erfindung ist der Ausdruck "Kommunlkationskanal" als jeder mögliche Weg oder als jedes denkbare Verfahren zum Senden und/oder Empfangen von Informationen zu verstehen. Im Zusammenhang mit der vorliegenden Erfindung kann der Ausdruck "Kommunikationskanal" als spezielle Radiofrequenz, als eine zugeordnetes Kabelpaar, eine spezielles Modulationsschema (z.B. RF Modulation, Amplitudenmodulation), oder ein spezifischer Bandbreitenumfang verstanden werden. In Figur 4A sind zwei Formen von Kommunikationskanälen gezeigt: Die RF Signale c1 und c2 und die Verkabelung (Doppelpfeil), welche den Zentralübermittler 5 über eine Schnittstelle mit dem Computer 7 verbindet.

Figur 4B zeigt ein zweites erfindungsgemässes Kommunikationsschema (II). Dieses Kommunikationsschema II wird zur individuellen Identifikation der auf dem Arbeitstisch 3 eines Laborgerätes 4 vorhandenen Objekte 2, wie Gestelle 14, Laborartikel 15 und Proben verwendet. Der Zentralübermittler 5 ist im Stande, RF Signale unter Verwendung des zweiten Kommunikationskanals c2 sowie Signale auf einem dritten Kommunikationskanal (c3) zu empfangen. Der dritte Kommunikationskanal c3 umfasst einen ersten Teil, welcher den Computer 7 mit einer Aktiviereinheit 9 verbindet, einen zweiten Teil (c3a), der die Aktiviereinheit 9 mit zumindest einem Sendeelement 22 verbindet und aus einem dritten Teil (c3b), der eine lokale Einheit 6 mit zumindest einem Laborartikel 15 verbindet.

In Fig. 4B sind unterschiedliche Arten von Kommunikationskanälen gezeigt: Die RF Signale c2 und c3b; die gerichteten Signale in den Verdrahtungen zwischen der Aktiviereinheit 9 und den Sendeelementen 22, die Aktivierung des Empfangselements 19 über das Sendeelement 22 und die Verdrahtung (Doppelpfeil) welche den Zentralübermittler 5 über eine Schnittstelle mit dem Computer 7 verbindet. Zudem ist die Verdrahtung zwischen einer lokalen Einheit 6 und deren Antennen 16 sowie die Verdrahtung zwischen dem Empfangselement 19 und der RFID-Etikette 10 (vgl. auch (t) in Fig. 4) der lokalen Einheit 6 dargestellt.

Die RFID-Etiketten 10 der lokalen Einheiten 6 sind als lokale Sende/Empfänger ausgebildet, die zum Empfangen der c1 RF Signale des ersten Kommunikationskanals (vgl. Fig. 4A), zum Umwandeln dieser Signale in entsprechende c2 RF Signale des zweiten Kommunikationskanals und zum Senden dieser c2 RF Signale des zweiten Kommunikationskanals an den Zentralübermittler 5 befähigt sind.

Die lokalen Einheiten 6 sind vorzugsweise zudem befähigt, über das Sendeelement 22 mit Strom versorgt zu werden und c2 RF Signale mit einer an der lokalen Einheit 6 angebrachten RFID-Etikette 10 auszusenden. Die lokalen Einheiten 6 sind vorzugsweise zudem befähigt, über das Sendeelement 22 aktiviert zu werden und c3b RF Signale über eine Antenne 16 an eine RFID-Etikette 10 zu senden, welche an einem Laborartikel 15 befestigt ist, der von einem Gestell 14 aufgenommen ist. Diese RFID-Etikette 10 ihrerseits ist im Stande, c2 RF Signale an den Zentralübermittler 5 zu senden. Jede RFID-Etikette 10 kann eine passive RFID-Etikette 10 sein, welche c1 RF Signale des ersten Kommunikationskanals und c3b RF Signale des dritten Kommunikationskanals empfangen sowie c2 RF Signale des zweiten Kommunikationskanals senden kann.

Das Sendeelement 22 kann durch den Computer 7 erkannt werden, in dem der dritte Kommunikationskanal c3 in umgekehrter Richtung zwischen Sendeelement 22, Aktiviereinheit 9 und Computer 7 verwendet wird. Das Empfangselement 19 jeder einzelnen lokalen Einheit 6 ist über ein sich unter dem Arbeitstisch 3 und im Register mit einer Gittereinheit 12 angeordneten Sendelement 22 individuell adressierbar. Die Sendeelemente 22 ihrerseits können über die Aktiviereinheit 9 individuell angesteuert und aktiviert werden.

Es existieren mehrere bevorzugte Varianten, einen Arbeitstisch 3 auszubilden:

Eine erste Variante umfasst eine Abdeckung 23 aus Stahl mit in einem Array und entsprechend dem Gitter 11 angeordneten Durchgangslöchern 24. In jedem Fall ist unterhalb eines Durchgangsloches 24 eines der Sendeelemente 22 in Register mit einem dieses Durchgangsloch 24 verschliessenden Stopfen 25 angeordnet. Dabei ist die Oberfläche 26 jedes Stopfens 25 oberflächenbündig mit der Oberfläche 8 des Arbeitstisches 3.

Eine zweite Variante des Arbeitstisches 3 umfasst eine Oberflächenschicht 27 aus Kunststoff auf der Oberfläche 8, wobei diese Oberflächenschicht 27 in einem Array entsprechend dem Gitter 11 angeordnete optisch durchsichtige Portionen 28 aufweist. In jedem Fall ist eines der Sendeelemente 22 unterhalb und in Register mit einer optisch durchsichtigen Portion 28 angeordnet.

Eine dritte Variante des Arbeitstisches 3 umfasst eine Abdeckung 23 aus Aluminium. Die Sendeelemente 22 sind unterhalb der Aluminiumabdeckung angeordnet. Jedes der Sendeelemente 22 ist als elektromagnetischer Sender ausgestattet, wobei die Aluminiumabdeckung durchlässig ist für das magnetische Feld der Sendeelemente 22.

Die Anwendung des bevorzugten, erfindungsgemässen Verfahrens wie in Anspruch 13 definiert, zum Identifizieren von auf einem Arbeitstisch 3 einer Laboreinrichtung 4 bzw. eines Systems 1 angeordneten Objekten 2 dient dem Erfassen einer ersten generellen Information und umfasst folgende Arbeitsschritte:
a) Alle zu identifizierenden Objekte 2 werden vorzugsweise mit Radiofrequenzidentifikations- (RFID) Etiketten ausgestattet. Es ist nicht absolut notwendig, die lokalen Einheiten 6 mit einer RFID-Etikette 10 zu versehen, weil diese lokalen Einheiten 6 auch über die Sendeelement 22 / Empfangselement 19 - Kombination unter Verwendung des Kommunikationskanals c3a (vgl. Fig. 4B) adressiert werden können. Es ist allerdings notwendig, dass alle Laborartikel 15, z.B. in Form von Probenröhrcheri oder Mikroplatten, mit einer RFID-Etikette 10 versehen werden.
b) Träger 13 oder Gestelle 14 werden auf der Oberfläche 8 des Arbeitstisches 3 platziert. Diese Träger oder "Carrier" 13 bzw. Gestelle oder "Racks" 14 sind zur Aufnahme von Laborartikeln 15 ausgebildet. Solche Laborartikel 15 können auf den Trägern 13 bzw. in den Gestellen 14 positioniert werden. Das Positionieren der Träger 13, welche in jedem Fall eine lokale Einheit 6 umfassen, kann manuell geschehen oder von einem Roboter der Laboreinrichtung 4 ausgeführt werden. Das Positionieren der Laborartikel 15 kann ebenfalls falls manuell oder von einem Roboter der Laboreinrichtung 4 automatisiert ausgeführt werden.
c) Ein Auftrag für das Senden eines generellen Radiofrequenz (RF) Signals wird von einem Computer 7 an einen über eine Schnittstelle mit dem Computer verbundenen (siehe Doppelpfeil in Fig. 4A) Zentralübermittler 5 gesandt. Dieser Auftrag kann durch einen Operateur oder einen Programmschritt eines entsprechenden Computerprogramms initiiert werden.
d) Das verlangte generelle RF Signal wird vom Zentralübermittler 5 unter Verwendung eines ersten Kommunikationskanals c1 gesendet. Vorzugsweise wird ein RF Signal einer ersten Frequenz für diese Übermittlung verwendet.
e) Das generelle in Schritt d) übermittelte RF Signal wird von allen an Objekten 2 befestigten RFID-Etiketten 10 empfangen. Weil zumindest jeder Laborartikel 15 mit einer solchen RFID-Etikette 10 ausgerüstet worden ist, werden alle an diesen Laborartikeln 15 befestigten RFID-Etiketten 10 durch den Empfang dieses generellen RF Signals aktiviert. Falls auch die lokalen Einheiten 6 mit einer RFID-Etikette 10 ausgerüstet worden sind, so empfangen auch diese RFID-Etiketten 10 das generelle RF Signal und werden ebenfalls aktiviert. Vorzugweise sind die RFID-Etiketten 10 zum Empfang von RF Signalen einer ersten Frequenz ausgebildet.
f) Das von den RFID-Etiketten 10 in Schritt e) empfangene RF Signal wird umgewandelt und das umgewandelte RF Signal wird durch die RFID-Etiketten 10 zum Zentralübermittler 5 unter Verwendung eines zweiten Kommunikationskanals c2 gesendet (vgl. Fig. 4A). Alle nur möglichen Arten von Antikollisionsprotokollen können angewendet werden, so kann z.B. das RF Signal von den RFID-Etiketten 10 mit einer zweiten Frequenz, mit von der ersten Frequenz unterschiedlichen Wellenlänge gesendet werden. Entsprechend den Fähigkeiten der verwendeten RFID-Etiketten 10 kann das zum Zentralübermittler gesendete RF Signal nur ein einfaches Signal umfassen, welches lediglich die Gegenwart dieser RFID-Etikette 10 und damit das Vorhandensein einer lokalen Einheit 6 oder eines Laborartikels 15 ankündigt. Es wird jedoch bevorzugt, dass die verwendeten RFID-Etiketten 10 zum Senden von RF Signalen befähigt sind, welche Informationen über die Art des Objekts 2 angeben, an welchen sie befestigt sind. Besonders bevorzugt wird das Übermitteln von zusätzlichen Informationen über die Art und die Geschichte der Probe oder der Proben welche in dem jeweiligen Laborartikel 15 enthalten sind. Speziell bevorzugte RFID-Etiketten 10 umfassen alle Fähigkeiten von gegenwärtigen und zukünftigen, kommerziell erhältlichen RFID-Etiketten 10; dabei sind wiederbeschreibbare RFID-Etiketten von besonderem Interesse.
g) Die von den RFID-Etiketten 10 in Schritt f) übermittelten RF Signale werden vom Zentralübermittler 5 empfangen.
h) Der Zentralübermittler 5 wandelt die in Schritt g) empfangenen RF Signale in digitale Daten um. Vorzugsweise ist der Zentralübermittler 5 im Stande, RF Signale einer ersten Frequenz zu senden und RF Signale einer zweiten Frequenz zu empfangen.
i) Der Zentralübermittler 5 sendet die in Schritt h) umgewandelten digitalen Daten zum Computer 7.
j) Der Computer 7 empfängt die in Schritt i) vom Zentralübermittler 5 übermittelten, digitalen Daten und verarbeitet diese. Entsprechend den in diesen vom Zentralübermittler 5, d.h. von den RFID-Etiketten 10 übertragenen Informationen, bestimmt der Computer die Zahl der auf dem Arbeitstisch 3 der Laboreinrichtung 4 anwesenden RFID-Etiketten 10 bzw. Objekte 2. Dieses Zählen gestaltet sich wesentlich einfacher, wenn ein Antikollisionsprotokoll angewendet wird. Ein solches Antikollisionsprotokoll kann z.B. darin bestehen, dass die RF Signale sequenziell (und nicht parallel) von den RFID-Etiketten 10 zum Zentralübermittler 5 übertragen werden, oder auch darin, dass zumindest die entsprechenden digitalen Daten sequenziell vom Zentralübermittler 5 auf den Computer 7 übertragen werden. Falls die RFID-Etiketten 10 zusätzliche Informationen übertragen, so ist der Computer 7 im Stande, eine Liste aller auf dem Arbeitstisch 3 anwesenden Objekte 2 zu erstellen. In der am meisten bevorzugten Verfahrensversion würde der Computer sogar eine Liste von allen Objekten 2 und von den auf dem Arbeitstisch vorhandenen Proben produzieren.

Die Anwendung des bevorzugten Verfahrens zum Identifizieren und Orten von auf dem Arbeitstisch 3 einer Laboreinrichtung 4 positionierten Objekten 2 zum Zwecke der Lokalisierung dieser Objekte 2 umfasst zudem die folgenden Arbeitsschritte:
k) Ein Auftrag, Energie an eine ausgewählte lokale Einheit 6 zu liefern, wird erfindungsgemäss vom Computer 7 zu der Aktiviereinheit 9 des Systems 1 gesandt. Dieser Auftrag kann wiederum durch einen Operateur oder einen Programmschritt eines entsprechenden Computerprogramms initiiert werden. Die Aktiviereinheit 9 ist über eine Schnittstelle mit dem Computer 7 verbunden und ein dritter Kommunikationskanal c3a wird dazu verwendet. Dieser Kommunikationskanal c3a ist als Verkabelung ausgebildet, welche die Aktiviereinheit 9 mit allen Sendeelementen 22 des Arbeitstisches 3 verbindet. Durch die individuelle Verkabelung der Sendeelemente 22 mit der Aktiviereinheit 9 kann jedes Sendeelement 22 einzeln mit Energie versorgt werden. Es können aber auch eine beliebige Auswahl von Sendeelemente 22 oder auch alle Sendeelemente 22 simultan angesteuert werden.
k) Die via die unterhalb der Abdeckung 23 des Arbeitstisches 3 der erfindungsgemässen Laboreinrichtung 4 angeordneten Sendeelemente 22 ausgewählten, lokalen Einheiten 6 werden über diese Sendeelemente 22 mit Energie versorgt. Dies wird durch ein z.B. als elektromagnetische Spule oder als optische Element ausgebildete Sendeelement 22 ermöglicht.
m) Die in Schritt I) aktivierte lokale Einheit 6 übermittelt mittels einer oder mehrerer Antennen 16 c3b RF Signale an RFID-Etiketten 10, die an auf dem Träger 13 oder im Gestell 14 der lokalen Einheit 6 aufgenommenen Laborartikeln 15 befestigt sind. Für jedes in das Gestell 14 der lokalen Einheit 6 eingesteckte Probenröhrchen wird vorzugsweise jeweils nur diejenige RFID-Etikette 10 aktiviert, welche sich am nächsten bei einer gerade sendenden Antenne 16 befindet.
   Deshalb kann - bei sequentieller Anregung der Antennen 16 einer lokalen Einheit 6 - jede einzelne RFID-Etikette 10 der Probenröhrchen individuell aktiviert werden. Weil die integrierte Schaltung der lokalen Einheit 6 den Sendeort der Antenne 16 kennt, werden die RFID-Etiketten 10 zusammen mit ihrer individuellen Probe in einem Röhrchen identifiziert und auch lokalisiert bzw. geortet. Für auf einem Träger 13 einer lokalen Einheit 6 positionierte Mikroplatten kann ein entsprechend gleichwertiges Verfahren angewendet werden. Dies trifft ebenfalls zu, wenn mehr als eine Mikroplatte auf einem Träger oder "Carrier" 13 positioniert wird. Vorzugsweise ist das c3b RF Signal ein RF Signal mit einer ersten Frequenz, die mit der ersten Frequenz der RF Signale übereinstimmt, welche vom Zentralübermittler 5 ausgesendet werden.
n) Die an einem Laborartikel 15 befestigte RFID-Etikette 10, die am nächsten der sendenden Antenne 16 angeordnet ist, empfängt das c3b RF Signal der entsprechenden lokalen Einheit 6. Normalerweise genügt die unmittelbare Nachbarschaft einer individuellen RFID-Etikette 10 zu einer ausgewählten, zu deren Aktivierung bestimmten Antenne 16, um die Übermittlung der RF Signale an ausschliesslich diese RFID-Etikette sicher zu stellen; alle anderen, ebenfalls auf dem Träger 13 anwesenden RFID-Etiketten 10 erkennen diese Signal-Übermittlung nicht. Ein zusätzliches Abschirmen der individuellen RFID-Etiketten 10 und/oder Antennen 16 (z.B. durch das Verwenden von Aluminiumfoliestücken) kann die Zuverlässigkeit des Empfangs noch verbessern. Folglich wird durch den Empfang dieser RF Signale nur eine bestimmte RFID-Etikette 10 selektiv und individuell aktiviert und diese RFID-Etikette 10 wandelt die in Schritt m) empfangenen c3b RF Signale in c2 RF Signale des zweiten Kommunikationskanals um und sendet diese an den Zentralübermittler 5. Vorzugsweise weist das c2 RF Signal eine zweite Frequenz auf, welche der zweiten Frequenz der RF Signale entspricht, die von den RFID-Etiketten 10 ausgesendet werden.
o) Der Zentralübermittler 5 empfängt diese durch eine RFID-Etikette 10 in Schritt n) ausgesendeten c2 RF Signale und wandelt diese RF Signale in digitale Daten um, welche er daraufhin an den Computer 7 sendet. Diese Datenübermittlung wird über die Verkabelung ausgeführt, welche den Zentralübermittler 5 via eine Schnittstelle mit dem Computer 7 verbindet.
p) Der Computer 7 analysiert die in Schritt o) erhaltenen digitalen Daten und erstellt einen X/Y-Verteilungsplan der auf dem Arbeitstisch 3 anwesenden Labortartikel 15. Die X/Y Koordinaten auf dem Arbeitstisch 3 werden durch die aktuelle Position der auf einer Gittereinheit 12 des Gitters 11 positionierten, lokalen Einheit 6 bestimmt. Individuelle Z-Werte (oder Höhen-Werte) werden vorzugsweise dem X/Y-Verteilungsplan der aktuellen Positionen der auf einer lokalen Einheit positionierten Laborartikel 15 beigefügt. Falls Träger 13 verwendet werden, die als Stapel von Mikroplatten aufnehmende "Hotels" ausgebildet sind, so wird vorzugsweise jede individuelle Z-Position bzw. jeder individuelle Z-Wert für jeden einzelnen Laborartikel 15 ebenfalls im X/Y-Verteilungsplan festgehalten. Um ein solches Erfassen von Z-Werten zu ermöglichen, werden auf jedem Stockwerk bzw. in jeder Z-Ebene, in welche eine Mikroplatte eingesetzt werden kann, Antennen 16 (und, falls notwendig, Abschirmungen) vorgesehen. Die Identifikation dieser lokalen Einheit 6 erfolgt durch eine selektive Adressierung über die Aktviereinheit 9 oder über eine sequentielle Kommunikation zwischen der Aktiviereinheit 9 und einigen oder allen lokalen Einheiten 6 via den Kommunikationskanal c3a (vgl. Fig. 4B). Abweichend davon können die lokalen Einheiten 6 über den Zentralübermittler 5 adressiert werden, falls an diesen eine RFID-Etikette 10 befestigt ist. Dabei ist eine solche RFID-Etikette 10 vorzugsweise so ausgebildet, dass sie auch Informationen über den Typ der lokalen Einheit 6 sendet, an welcher sie befestigt ist.

Die Anwendung der erfindungsgemässen Verfahren zum Identifizieren und Orten von Objekten 2, die sich auf dem Arbeitstisch 3 einer Laboreinrichtung 4 befinden, mit dem Ziel, Informationen über deren Ortsveränderungen bzw. Bewegungen zu erlangen, umfasst das Wiederholen einzelner oder aller Arbeitsschritte a) bis p) wie diese weiter oben definiert sind.

Das Aktivieren der ausgewählten lokalen Einheit 6 mit einem unter dem Arbeitstisch 3 der Laboreinrichtung 4 angeordneten Sendeelement 22 kann mit jedem System ausgeführt werden, welches fähig ist Energie durch die Oberfläche 8 des Arbeitstisches 3 hindurch zu transportieren. Bevorzugte solche Energietransfersysteme umfassen die Verwendung von elektrischer Induktion, von kapazitiver Koppelung oder von optischer Übermittlung.

Ebenso können die an den Laborartikeln 15 angeordneten RFID-Etiketten 10 mit jedem System angeregt werden, welches fähig ist, Energie gezielt an den individuellen Aufenthaltsort dieser Laborartikel 15 zu liefern. Bevorzugte solche Energietransfersysteme umfassen die Verwendung von RF-Signalen, von elektrischer Induktion, von kapazitiver Koppelung oder von optischer Übermittlung (z.B. in Form von sichtbarem Licht oder Infrarotlicht). Speziell bevorzugt bei einer optischen Übermittlung ist das Verwenden von fokussiertem Infrarotlicht, welches in eine in die RFID-Etikette integrierte oder zumindest damit wirkverbundene Photozelle auftrifft. Ein optisches Sendeelement pro anzuregendem Laborartikel 15, wie z.B. Laserdioden mit grosser Leistung oder individuelle Lichtleiter, die zu den einzelnen Laborartikeln führen, befähigen eine lokale Einheit zur Energieübertragung an solche opto-elektrische RFID-Etiketten. Im Falle der Verwendung von Lichtleitern für mehrere auf einer lokalen Einheit 6 platzierten Laborartikel 15 kann den einzelnen Lichtleiterkanälen eine individuelle Wellenlänge des Anregungslichts zugeordnet werden.

Vorteile bei der Verwendung von Lichtenergie, insbesondere von fokussiertem Infrarotlicht, umfassen ein gegenüber den RF-Signalen wesentlich einfacheres Abschirmen der nicht anzuregenden Nachbarn dieser Laborartikel 15. Es können auch Mischvarianten der Energieübertragung an die lokalen Einheiten 6 und an die RFID-Etiketten 10 der Laborartikel 15 vorgesehen werden, bei welchen z.B. die lokalen Einheiten 6 mittels elektrischer Induktion, die RFID-Etiketten 10 der Laborartikel 15 jedoch mit Licht, vorzugsweise mit fokussiertem Infrarotlicht, aktiviert werden.

Alternativ zu den bereits dargestellten Ausführungsformen kann Licht (z.B. in Form von sichtbarem Licht oder Infrarotlicht) auch zum Auslösen eines Schaltimpulses verwendet werden. In dieser speziellen Ausführungsform erfolgt die Energieübertragung mittels elektrischer Induktion oder mittels RF-Signalen. Bevorzugt wird für jede zu aktivierende RFID-Etikette ein individueller Lichtimpuls abgegeben und von einem entsprechenden mit der RFID-Etikette verbundener Sensor detektiert. Dies hat den Vorteil, dass eine gemeinsame Energieversorgung gewährleistet werden kann, und dass - trotz individueller Antwort durch eine oder mehrere adressierte RFID-Etiketten - keine komplizierten Abschirmungsprotokolle vorgesehen werden müssen.

Um die lokalen Einheiten 6 an ihrer Position auf der Oberfläche 8 des Arbeitstisches 3 festzuhalten (dies jedoch ohne den Einsatz von mechanischen Haltemitteln, wie Schienen, Einkerbungen, Zapfen und Steckern) werden Magnetvorrichtungen 20 (vgl. Figuren 2 und 3) verwendet. So können auch die Träger 13 bzw. die Gestelle 14 auf dem Arbeitstisch 3 in Position gehalten werden.

Zur Definition einer exakten Position der lokalen Einheiten 6, welche zum Umfassen von Trägern 13 oder Gestellen 14 zur Aufnahme von Laborartikeln 15 ausgebildet sind, können speziell ausgebildete Sendeelemente 22 und Empfangselemente 19 als Mikropositionierelemente 21 verwendet werden. Um dieses Ziel zu erreichen werden Sende- und Empfangselemente ausgewählt, die eine Ortsabweichung im Bereich von Millimetern oder noch weniger feststellen können. Eine so hohe Auflösung kann durch die Verwendung eines Lichtschrankensystems oder eines induktiven Systems erreicht werden. Das induktive System wird dann solche Spulen für die Sendeelemente 22 und Empfangselemente 19 umfassen, die sehr eng begrenzte Überlappungsbereiche der elektromagnetischen Feldlinien aufweisen, wenn diese Elemente übereinander bzw. in einem Register am Arbeitstisch 3 einer Laboreinrichtung 4 angeordnet werden. Die Aktiviereinheit 9 kann leicht eine Fehlstellung feststellen, wenn sie mit den lokalen Einheiten 6 kommuniziert: Selbst geringste Fehlstellungen werden dadurch entdeckt, dass die Energieaufnahme der lokalen Einheiten 6 beträchtlich sinkt.

Solche Mikropositionierelemente 21 können Teil der Sendeelemente 22 und der Empfangselemente 19 sein. Sie können auch Teil der Magnete 20, oder abweichend davon, separiert von den anderen Systemen in den lokalen Einheiten 6 und unterhalb der Oberfläche 8 der Arbeitstische 3 angeordnet sein. In jedem Fall wird die exakte Position der Mikropositionierelemente 21 vorzugsweise in bezug auf das Gitter 11 und die Gittereinheiten 12 definiert.

Wird der Computer 7 mit der entsprechenden Software betrieben, so ist dieser im Stande, detaillierte Oberflächenkarten und Listen der Objekte 2, d.h. der lokalen Einheiten 6, der Träger 13 und Gestelle 14 und ebenso der Laborartikel 15 und Proben, die auf dem Arbeitstisch 3 einer Laboreinrichtung 4 anwesend sind, zu erstellen. Eine solche Laboreinrichtung 4 kann ein einzelnes Instrument oder ein Teil eines übergeordneten logistischen Systems 31 zum Behandeln bzw. zum Verarbeiten von Proben, wie Blut und andere Körperflüssigkeiten von Menschen und Tieren. Solche übergeordneten Logistiksysteme 31 können alle Instrumente und Geräte umfassen, die notwendig sind zum Verarbeiten, Analysieren, Behandeln, Transferieren und Aufbewahren von biologischen oder chemischen Proben. Der Computer 7 ist bevorzugt in der Lage, alle digitalen Daten an solche übergeordneten logistischen Systeme zu liefern bzw. bereitzustellen, welche der Identität und der Position der Objekte 2 auf der Oberfläche 8 des Arbeitstischs 3 entsprechen. Das zur Verfügung stellen der aktuellen Positionen und Bewegungen der individuellen Proben auf dem Arbeitstisch 3 kann eine solche Laboreinrichtung 4 in ein übergeordnetes logistisches System 31 zur Bearbeitung und Analyse von beliebigen Proben integrieren. Mehrere und unterschiedliche Arbeits- oder Aufbewahrungsbereiche einer einzelnen Arbeitsstation und sogar mehrere Arbeitsstationen können mittels einem oder mehreren Robotermanipulatoren 32, wie z.B. Plattentragrobotern (vgl. Fig. 2) oder anderen automatisierbaren Transfervorrichtungen, wie Förderband- oder Schienensystemen untereinander verbunden werden.

Die Bezugszeichen benennen entsprechende Elemente der Vorrichtung in allen Figuren, auch wenn diese nicht ausdrücklich beschrieben sind. Alle sinnvollen Kombinationen von in den Figuren gezeigten oder beschriebenen Merkmalen sind Teil der vorliegenden Erfindung. Eine Vielzahl von kommerziell erhältlichen RFID-Etiketten zeigt eine ganze Palette von Datenspeichermöglichkeiten, Identifikationen, Frequenzbereichen, Grössen, räumlichen Wirkungsbereichen und Kommunikationsprotokollen, Antikollisionsprotokolle eingeschlossen. Die vorliegende Erfindung verwendet solche RFID-Etiketten; die RFID-Etiketten selbst sind jedoch nicht Teil der Erfindung. Deshalb wird die vorliegende Erfindung nicht durch eine bestimmte Art eines RFID-Systems oder einer RFID-Lösung eingeschränkt.

Abweichend von den bisher dargestellten Ausführungsformen der vorliegenden Erfindung, bei der bestimmte Adressaten gezielt angeregt werden, kann auch vorgesehen sein, dass alle erreichbaren RFID-Etiketten 10 gleichzeitig angeregt werden, dass jedoch eine bestimmte Auswahl (ev. auch alle mit Ausnahme einer einzigen) von RFID-Etiketten elektronisch gestört wird, so dass sie am Abgeben einer Antwort behindert werden. Die negative Auswahl durch Stören hat den Vorteil, dass Störsignale einfacher und zielgenauer abgegeben bzw. gesendet werden können, als dies beim Anregen möglich ist. Alle eventuellen Antworten von RFID-Etiketten werden durch das gezielte Stören unterdrückt.

Es ist ebenfalls möglich, die Kommunikationskanäle, insbesondere c3a und c3b (vgl. Fig. 4B), in umgekehrter Richtung zum Identifizieren der entsprechend adresslerten-RFID-Etiketten 10 zu verwenden. Für einen Fachmann sinnvolle Kombinationen der offenbarten Merkmale der vorliegenden Erfindung gehören zu deren Umfang.

## Patentansprüche

1. System (1) zum Identifizieren und Orten von Objekten (2), wobei das System (1) umfasst:
Radiofrequenzidentifikations- (RFID) Etiketten (10) zum Befestigen auf zu identifizierenden und zu ortenden Objekten (2), wobei die RFID-Etiketten (10) zum Empfangen und zum Senden von Signalen ausgebildet sind;
Träger (13) oder Gestelle (14) zum Aufnehmen von zu identifizierenden und zu ortenden Objekten (2),
eine Mehrzahl von Antennen (16) zum Senden von Signalen an die zu ortenden RFID-Etiketten;
zumindest eine Einheit, die ein Empfangselement (19) und ein Sendeelement (22) umfasst, wobei
das Empfangselement (19) mit den Antennen (16) verbunden und zum Aktivieren der Antennen (16) ausgebildet ist, so dass eine RFID-Etikette (10), die sich bei einer gerade von diesem Empfangselement (19) aktivierten und sendenden Antenne (16) befindet, aktivierbar ist; und wobei
das Sendeelement (22) zum Senden von Energie an das Empfangselement (19) der Einheit ausgebildet ist;
einen Computer (7) und einen Zentralübermittler (5), wobei der Zentralübermittler (5) zumindest zum Senden von Signalen an zumindest ein Sendeelement (22) und zum Empfangen von Signalen der RFID-Etiketten (10) sowie zum Umwandeln von empfangenen Signalen und zum Übermitteln der umgewandelten Signale an den Computer (7) ausgebildet ist, und wobei der Computer (7) eine Software zum Zuordnen von Identität und Position von Objekten (2) umfasst, welche die vom Zentralübermittler (5) übermittelten Signale verarbeitet,
**dadurch gekennzeichnet, dass** das System (1) als ein Laborsystem ausgebildet ist, welches eine Laboreinrichtung (4) mit einem Laborarbeitstisch (3) umfasst, wobei zu identifizierende und zu ortende Laborartikel (15) sowie der Träger (13) oder das Gestell (14) über einer Oberfläche (8) des Laborarbeitstisches (3) positionierbar sind, und wobei der Laborarbeitstisch (3) ein virtuelles Gitter (11) umfasst, welches zum Einteilen der Oberfläche (8) des Laborarbeitstischs (3) in Gittereinheiten (12) ausgebildet ist;
**dass** die Einheit als eine lokale Einheit (6) ausgebildet ist, die zumindest ein Empfangselement (19) umfasst und die von dem Träger (13) oder Gestell (14) umfasst wird;
**dass** Sendeelemente (22) unterhalb der Oberfläche (8) des Laborarbeitstisches (3) in definierter Position angeordnet sind und so je einen Gitterschnittpunkt des Gitters (11) definieren;
**dass** ein Empfangselement (19) einer lokalen Einheit (6) im Register über einem Sendeelement (22) angeordnet ist, wobei das Sendeelement (22) zum Senden von Energie durch den Laborarbeitstisch (3) hindurch an dieses Empfangselement (19) ausgebildet ist;
**und dass** zumindest eine Antenne (16) von einem Träger (13) oder einem Gestell (14) umfasst wird, so dass eine einzelne RFID-Etikette (10) eines Laborartikels (15), die sich am nächsten bei einer gerade von diesem Empfangselement (19) aktivierten und sendenden Antenne (16) des Trägers (13) oder des Gestells (14) befindet, individuell aktivierbar ist.

2. Laborsystem (1) nach Anspruch 1, **dadurch gekennzeichnet, dass** die lokale Einheit (6) zudem eine Positionierungsvorrichtung (17) zum kontrollierten Positionieren der Träger (13) oder Gestelle (14) auf der Oberfläche (8) des Labortisches (3) umfasst.

3. Laborsystem (1) nach Anspruch 2, **dadurch gekennzeichnet, dass** die Posltionierungsvorrichtung (17) ein Empfangselement (19) umfasst oder als Magnetvorrichtung (20) ausgebildet ist.

4. Laborsystem (1) nach einem der Ansprüche 1 bis 3, **dadurch gekennzeichnet, dass** es zumindest eine Aktiviereinheit (9) umfasst, die zum Aktivieren der Sendeelemente (22) ausgebildet ist und die mit dem Computer (7) und mit dem Zentralübermittler (5) verbunden ist.

5. Laborsystem (1) nach einem der Ansprüche 1 bis 4, **dadurch gekennzeichnet, dass** pro lokaler Einheit (6) ein Sendeelement (22) zum Senden von Lichtenergie als ein optisches Sendeelement ausgebildet ist, wobei das entsprechende Empfangselement (19) als ein optisches Element zum Empfangen der Lichtenergie und zum Umwandeln der Lichtenergie in elektrische Energie ausgebildet ist.

6. Laborsystem (1) nach einem der Ansprüche 1 bis 4 , **dadurch gekennzeichnet, dass** das pro lokaler Einheit (6) ein Empfangselement (19) als eine Induktionsspule und ein entsprechendes Sendeelement (22) als eine elektromagnetische Spule zum Aktivieren des Empfangselements (19) durch ein elektromagnetisches Feld ausgebildet ist.

7. Laborsystem (1) nach einem der vorhergehenden Ansprüche, **dadurch gekennzeichnet, dass** zum Verbessern der Zuverlässigkeit des Empfangs eines individuellen, von einer Antenne (16) gesendeten und von einer bestimmten RFID-Etikette (10) empfangenen Signals, die individuellen RFID-Etiketten (10) und/oder die individuellen Antennen (16) jeweils gegeneinander abgeschirmt sind.

8. Laborsystem (1) nach einem der vorhergehenden Ansprüche, **dadurch gekennzelchnet, dass** der Laborarbeitstisch (3) eine Abdeckung (23) aus Stahl mit Durchgangslöchern (24) aufweist, die in einem Array entsprechend den Gitterschnittpunkten des Gitters (11) angeordnet sind, wobei unterhalb eines Durchgangslochs (24) jeweils ein Sendeelement (22) im Register mit einem dieses Durchgangsloch (24) verschliessenden Stopfen (25) angeordnet ist, und wobei die Oberfläche (26) des Stopfens (25) oberflächenbündlg mit der Oberfläche (8) des Laborarbeitstisches (3) ausgebildet ist.

9. Laborsystem (1) nach einem der Ansprüche 1 bis 7, **dadurch gekennzeichnet, dass** die Oberfläche (8) des Laborarbeitstischs (3) eine Oberflächenschicht (27) aus Kunststoff umfasst, welche zumindest im Bereich der Sendeelemente (22) optisch durchsichtige Portionen (28) aufweist, wobei die Sendeelemente (22) unterhalb dieser Oberflächenschicht (27) aus Kunststoff angeordnet sind.

10. Laborsystem (1) nach einem der Ansprüche 1 bis 4 oder 6 bis 7, **dadurch gekennzelchnet, dass** der Laborarbeitstisch (3) eine Abdeckung (23) aus Aluminium aufweist, wobei die Sendeelemente (22) als elektromagnetische Sender ausgebildet und unterhalb dieser Aluminiumabdeckung angeordnet sind, und wobei die Aluminiumabdeckung durchlässig ist für das elektromagnetische Feld der Sendeelemente (22).

11. Laborsystem (1) nach einem der vorhergehenden Ansprüche, **dadurch gekennzeichnet, dass** die Laboreinrichtung (4) ein robotisierter Probenprozessor (RSP) ist.

12. Laborsystem (1) nach einem der vorhergehenden Ansprüche, **dadurch gekennzeichnet, dass** zum optischen Anregen der RFID-Etiketten (10) die lokale Einheit (6) zumindest ein optisches Sendeelement zum Aussenden von Lichtenergie umfasst, und dass die RFID-Etiketten (10) zum Empfangen von Lichtenergle eine Photozelle umfassen oder mit einer Photozelle in Wirkverbindung stehen.

13. Verfahren zum Identifizieren und Orten von Objekten (2) in einem Laborsystem (1), welches folgende Schritte umfasst:
a) Bereitstellen von Radlofrequenzident!fikations-(RFID) Etiketten (10) auf zu identifizierenden und zu ortenden Objekten (2), wobei die RFID-Etiketten (10) zum Empfangen und zum Senden von Signalen ausgebildet sindn;
b) Bereitstellen von Trägern (13) oder Gestellen (14) zum Aufnehmen von zu identifizierenden und zu ortenden Objekten (2);
c) Bereitstellen einer Mehrzahl von Antennen (16), die Signale an die zu ortenden RFID-Etiketten (10) senden;
d) Bereitstellen von zumindest einer Einheit, die ein Empfangselement (19) und ein Sendeelement (22) umfasst, wobei
das Empfangselement (19) mit den Antennen (16) verbunden ist und diese aktiviert, so dass eine RFID-Etikette (10), die sich bei einer gerade von diesem Empfangselement (19) aktivierten und sendenden Antenne (16) befindet, aktiviert wird, und wobei
das Sendeelement (22) Energie an das Empfangselement (19) der Einheit sendet,
e) Bereitstellen von einem Computer (7) und einem Zentralübermittler (5), wobei der Zentralübermittler (5) zumindest zum Senden von Signalen an zumindest ein Sendeelement (22) und zum Empfangen von Signalen der RFID-Etlketten (10) sowie zum Umwandeln von empfangenen Signalen und zum Übermitteln der umgewandelten Signale an den Computer (7) ausgebildet ist, und wobei der Computer (7) eine Software zum Zuordnen von Identität und Position von Objekten (2) umfasst, welche die vom Zentralübermittler (5) übermittelten Signale verarbeitet,
**dadurch gekennzeichnet, dass** das System (1) als ein Laborsystem ausgebildet ist, welches eine Laboreinrichtung (4) mit einem Laborarbeitstisch (3) umfasst, wobei zu identifizierende und zu ortende Laborartikel (15) sowie der Träger (13) oder das Gestell (14) über einer Oberfläche (8) des Laborarbeitstisches (3) positioniert werden, und wobei der Laborarbeitstisch (3) ein virtuelles Gitter (11) umfasst, welches die Oberfläche (8) des Laborarbeitstischs (3) in Gittereinheiten (12) einteilt;
**dass** die Einheit als eine lokale Einheit (6) ausgebildet ist, die zumindest ein Empfangselement (19) umfasst und die von dem Träger (13) oder Gestell (14) umfasst wird,
**dass** Sendeelemente (22) unterhalb der Oberfläche (8) des Laborarbeitstisches (3) in definierter Position angeordnet werden und so je einen Gitterschnittpunkte des Gitters (11) definieren,
**dass** ein Empfangselement (19) einer lokalen Einheit (6) im Register über einem Sendeelement (22) angeordnet wird, wobei das Sendeelement (22) Energie durch den Laborarbeitstisch (3) hindurch an dieses Empfangselement (19) sendet;
**und dass** zumindest eine Antenne (16) von einem Träger (13) oder einem Gestell (14) umfasst wird, so dass eine einzelne RFID-Etikette (10) eines Laborartikels (15), die sich am nächsten bei einer gerade von diesem Empfangselement (19) aktivierten und sendenden Antenne (16) des Trägers (13) oder des Gestells (14) befindet, individuell aktiviert wird.

14. Verfahren nach Anspruch 13, **dadurch gekennzeichnet, dass** zum Verfolgen von Objekten (2) das Aktivieren einzelner RFID-Etiketten (10) und Verarbeiten der übermittelten Signale durch den Computer (7) vor und nach dem Bewegen des Objekts (2) durchgeführt wird.

15. Verfahren nach Anspruch 13 oder 14, **dadurch gekennzeichnet, dass** das Aktivieren des Empfangselements (19) unter Verwendung von elektrischer Induktivität oder optischer Anregung durchgeführt wird.

16. Verfahren nach einem der Ansprüche 13 bis 15, **dadurch gekennzeichnet, dass** Positionierungsvorrichtungen (17) verwendet werden, um die Träger (13) bzw. die Gestelle (14) auf der Oberfläche (8) des Laborarbeitstisches (3) in Position zu halten.

17. Verfahren nach einem der Ansprüche 13 bis 16, **dadurch gekennzeichnet, dass** der Computer (7) eine entsprechende Software umfasst, die ihn befähigt, Oberflächenkarten und Listen der Objekte (2), die auf dem Laborarbeitstisch (3) anwesend sind, zu erstellen.

18. Verwendung eines Laborsystems (1) nach einem der Ansprüche 1 bis 12 oder des Verfahrens nach einem der Ansprüche 13 bis 17, **dadurch gekennzeichnet, dass** die digitalen Daten, welche den Positionen der Objekte (2) auf der Oberfläche (8) des Laborarbeitstischs (3) entsprechen, übergeordneten logistischen Systemen zur Verfügung gestellt werden.

## Claims

1. System (1) for identifying and localizing objects (2), wherein the system (1) comprises:
radio frequency identification (RFID) tags (10) for affixing onto objects (2) to be identified and to be localized, wherein the RFID tags (10) are configured to receive and to send signals;
carriers (13) or racks (14) for accommodating objects (2) to be identified and to be localized;
a plurality of antennas (16) for sending signals to the RFID tags (10) to be localized;
at least one unit which comprises a receiving element (19) and a sending element (22), wherein
the receiving element (19) is connected with the antennas (16) and is configured to activate the antennas (16) such that an RFID tag (10), which is positioned near an antenna (16) that is currently activated by this receiving element (19) and sending, is activatable;
and wherein
the sending element (22) is configured to send energy to the receiving element (19) of the unit;
a computer (7) and a central transmitter (5), wherein the central transmitter (5) is configured at least to send signals to at least one sending element (22) and to receive signals of the RFID-tags (10) as well as to convert received signals and to transmit the converted signals to the computer (7), and wherein the computer (7) comprises a software for correlating the identity and position of objects (2), which software processes the signals transmitted from the central transmitter (5),
**characterized in that** the system (1) is configured as a laboratory system, which comprises a laboratory facility (4) with a laboratory work table (3), wherein laboratory articles (15) to be identified and to be localized as well as the carrier (13) or the rack (14) are positionable above a surface (8) of the laboratory work table (3) and wherein the laboratory work table (3) comprises a virtual grid (11) which is configured to subdivide the surface (8) of the laboratory work table (3) in grid units (12);
**in that** the unit is configured as a local unit (6) which comprises at least one receiving element (19) and which is comprised by the carrier (13) or the rack (14);
**in that** sending elements (22) are arranged below the surface (8) of the laboratory work table (3) in respective defined positions and thus respectively define a grid intersection point of the grid (11);
**in that** a receiving element (19) of a local unit (6) is arranged in register above a sending element (22), wherein the sending element (22) is configured to send energy through the laboratory work table (3) to this receiving element (19);
**and in that** at least one antenna (16) is comprised by a carrier (13) or a rack (14), so that one single RFID tag (10) of a laboratory article (15) is individually activatable, the single RFID tag (10) tag being positioned closest to an antenna (16) of the carrier (13) or the rack (14), which antenna is currently activated by this receiving element (19) and sending.

2. Laboratory system (1) according to claim 1, **characterized in that** the local unit (6) further comprises a positioning device (17) for positioning in a controlled way the carriers (13) or racks (14) on the surface (8) of the laboratory work table (3).

3. Laboratory system (1) according to claim 2, **characterized in that** the positioning device (17) comprises a receiving element (19) or is configured as a magnet device (20).

4. Laboratory system (1) according to any one of the claims 1 to 3, **characterized in that** it comprises at least one activation unit (9) which is configured to activate the sending elements (22) and which is connected to the computer (7) and to the central transmitter (5).

5. Laboratory system (1) according to any one of the claims 1 to 4, **characterized in that** for each local unit (6) one sending element (22) for sending light energy is configured as an optical sending element, wherein the corresponding receiving element (19) is configured as an optical element for receiving the light energy and for converting the light energy into electrical energy.

6. Laboratory system (1) according to any one of the claims 1 to 4, **characterized in that** for each local unit (6) one receiving element (19) is configured as an induction coil and a corresponding sending element (22) is configured as an electromagnetic coil for activating the receiving element (19) by an electromagnetic field.

7. Laboratory system (1) according to any one of the preceding claims, **characterized in that** in order to improve the reliability of the reception of an individual signal that has been sent by an antenna (16) and received by a particular RFID tag (10), the individual RFID tags (10) and/or the individual antennas (16) are respectively shielded against each other.

8. Laboratory system (1) according to any one of the preceding claims, **characterized in that** the laboratory work table (3) comprises a coverage (23) made of steel and having clearance holes (24) which are arranged in an array corresponding to the grid intersection points of the grid (11), wherein a respective sending element (22) is arranged below each clearance hole (24) in register with a plug (25) which is shutting this clearance hole (24), and wherein the surface (26) of the plug (25) is configured flush with the surface (8) of the laboratory work table (3).

9. Laboratory system (1) according to any one of the claims 1 to 7, **characterized in that** the surface (8) of the laboratory work table (3) comprises a surface layer (27) made of plastics, which surface layer comprises optically transparent portions (28) at least in the region of the sending elements (22), wherein the sending elements (22) are arranged beneath this surface layer (27) made of plastics.

10. Laboratory system (1) according to any one of the claims 1 to 4 or 6 to 7, **characterized in that** the laboratory work table (3) comprises a coverage (23) made of aluminum, wherein the sending elements (22) are configured as electromagnetic senders and arranged beneath this aluminum coverage, and wherein the aluminum coverage is transparent for the electromagnetic field of the sending elements (22).

11. Laboratory system (1) according to any one of the preceding claims, **characterized in that** the laboratory facility (4) is a robotic sample processor (RSP).

12. Laboratory system (1) according to any one of the preceding claims, **characterized in that** in order to optically excite the RFID tags (10), the local unit (6) comprises at least one optical sending element for emitting light energy, and **in that** in order to receive light energy, the RFID tags (10) comprise a photo cell or are in operative connection with a photo cell.

13. Method for identifying and localizing objects (2) in a laboratory system (1), the method comprising the following steps:
a) providing radio frequency identification (RFID) tags (10) on objects (2) to be identified and to be localized, wherein the RFID tags (10) are configured to receive and to send signals;
b) providing carriers (13) or racks (14) for accomodating objects (2) to be identified and to be localized;
c) providing a plurality of antennas (16) which send signals to the RFID tags (10) to be localized;
d) providing at least one unit which comprises a receiving element (19) and a sending element (22), wherein
the receiving element (19) is connected with the antennas (16) and activates these, so that an RFID tag (10), which is positioned near an antenna (16) that is currently activated by this receiving element (19) and sending, is activated, and wherein
the sending element (22) sends energy to the receiving element (19) of the unit;
e) providing a computer (7) and a central transmitter (5), wherein the central transmitter (5) is configured at least to send signals to at least one sending element (22) and to receive signals of the RFID tags (10) as well as to convert received signals and to transmit the converted signals to the computer (7), and wherein the computer (7) comprises a software for correlating the identity and position of objects (2), which software processes the signals transmitted from the central transmitter (5);
**characterized in that** the system (1) is configured as a laboratory system, which comprises a laboratory facility (4) with a laboratory work table (3), wherein laboratory articles (15) to be identified and to be localized as well as the carrier (13) or the rack (14) are positioned above a surface (8) of the laboratory work table (3) and wherein the laboratory work table (3) comprises a virtual grid (11) which is configured to subdivide the surface (8) of the laboratory work table (3) in grid units (12);
**in that** the unit is configured as a local unit (6) which comprises at least one receiving element (19) and which is comprised by the carrier (13) or the rack (14);
**in that** sending elements (22) are arranged below the surface (8) of the laboratory work table (3) in respective defined positions and thus respectively define a grid intersection point of the grid (11);
**in that** a receiving element (19) of a local unit (6) is arranged in register above a sending element (22), wherein the sending element (22) sends energy through the laboratory work table (3) to this receiving element (19);
**and in that** at least one antenna (16) is comprised by the carrier (13) or the rack (14), so that one single RFID tag (10) of a laboratory article (15) is individually activated, which single RFID tag (10) is positioned closest to an antenna (16) of the carrier (13) or of the rack (14), which antenna is currently activated by this receiving element (19) and sending.

14. Method according to claim 13, **characterized in that** in order to trace objects (2), activation of single RFID tags (10) and processing of the transmitted signals is performed by the computer (7) prior to and after the displacement of the object (2).

15. Method according to claim 13 or 14, **characterized in that** activation of the receiving element (19) is performed using electrical inductance or optical excitation.

16. Method according to any one of the claims 13 to 15, **characterized in that** positioning devices (17) are used to hold in position the carriers (13) or racks (14) respectively on the surface (8) of the laboratory work table (3).

17. Method according to any one of the claims 13 to 16, **characterized in that** the computer (7) comprises according software which enables the computer to generate surface maps and lists of the objects (2) which are present on the laboratory work table (3).

18. Use of a laboratory system (1) according to any one of the claims 1 to 12 or of a method according to any one of the claims 13 to 17, **characterized in that** the digital data, which correspond to the positions of the objects (2) on the surface (8) of the laboratory work table (3), are made available to superordinate logistical systems.

## Revendications

1. Système (1) pour identifier et localiser des objets (2), cependant le système (1) comprend:
des étiquettes de radio-identification (RFID) (10) pour l'attache à des objets (2) à identifier et à localiser, cependant les étiquettes RFID (10) sont configurées pour recevoir et pour émettre des signaux;
des supports (13) ou des châssis (14) pour loger des objets (2) à identifier et à localiser;
une pluralité des antennes (16) pour émettre des signaux aux étiquettes RFID (10) à localiser;
au moins une unité quelle comprend un élément de réception (19) et un
élément d'émission (22), cependant
l'élément de réception (19) est connecté aux antennes (16) et est configuré pour activer les antennes (16) de façon qu'une étiquette RFID (10) peut être activée, l'étiquette RFID (10) étant positionnée près d'une antenne (16) quelle est activée par cet élément de réception (19) et émet à l'instant; et cependant
l'élément d'émission (22) est configuré pour émettre de l'énergie à l'élément de réception (19) de l'unité;
un ordinateur (7) et un transmetteur central (5), cependant le transmetteur central (5) est configuré au moins pour émettre des signaux à au moins un élément d'émission (22) et pour recevoir des signaux des étiquettes RFID (10) ainsi que pour convertir des signaux reçus et pour transmettre des signaux convertis à l'ordinateur (7), et cependant l'ordinateur (7) comprend un logiciel pour attribuer l'identité et la position des objets (2), lequel logiciel étant configuré pour traiter des signaux transmis du transmetteur central (5);
**caractérisé en ce que** le système (1) est configuré comme un système de laboratoire, qui comprend un équipement de laboratoire (4) avec une table de travail de laboratoire (3), cependant des articles de laboratoire (15) à identifier et à localiser ainsi que le support (13) ou le châssis (14) peuvent être positionnés au-dessus d'une surface (8) de la table de travail de laboratoire (3) et cependant la table de travail de laboratoire (3) comprend un réseau virtuel (11) qui est configuré pour subdiviser la surface (8) de la table de travail de laboratoire (3) dans des unités (12) de réseau;
**en ce que** l'unité est configurée comme une unité locale (6) laquelle comprend au moins un élément de réception (19) et laquelle est comprise du support (13) ou du châssis (14);
**en ce que** des éléments d'émission (22) sont disposés au-dessous de la surface (8) de la table de travail de laboratoire (3) respectivement dans des positions définies et ainsi définissent respectivement un point d'intersection de réseau du réseau (11);
**en ce qu**'un élément de réception (19) d'une unité locale (6) est disposé en registre au-dessus d'un élément d'émission (22), cependant l'élément d'émission (22) est configuré pour émettre de l'énergie à travers de la table de travail à laboratoire (3) à cet élément de réception (19);
**et en ce que** au moins une antenne (16) est comprise du support (13) ou du châssis (14), ainsi qu'une seule étiquette RFID (10) d'un article de laboratoire (15) peut être activée individuellement, la seule étiquette RFID (10) étant positionnée plus proche d'une antenne (16) du support (13) ou du châssis (14), l'antenne (16) étant activée par cet élément de réception (19) et émet à l'instant.

2. Système (1) de laboratoire selon la revendication 1, **caractérisé en ce que** l'unité locale (6) comprend en outre un dispositif de positionnement (17) pour positionner d'une façon contrôlée les supports (13) ou les châssis (14) sur la surface (8) de la table de travail de laboratoire (3).

3. Système (1) de laboratoire selon la revendication 2, **caractérisé en ce que** le dispositif de positionnement (17) comprend un élément de réception (19) ou est configuré comme un dispositif d'aimant (20).

4. Système (1) de laboratoire selon quelques unes des revendications 1 à 3, **caractérisé en ce qu'**il comprend au moins une unité d'activation (9), quelle est configurée à activer les éléments d'émission (22) et quelle est connectée avec l'ordinateur (7) et avec le transmetteur central (5).

5. Système (1) de laboratoire selon quelques unes des revendications 1 à 4, **caractérisé en ce que** pour chaque unité locale (6) un élément d'émission (22) pour émettre de l'énergie lumineuse est configuré comme un élément d'émission optique, cependant l'élément de réception (19) correspondant est configuré comme un élément optique pour recevoir de l'énergie lumineuse et pour convertir de l'énergie lumineuse dans de l'énergie électrique.

6. Système (1) de laboratoire selon quelques unes des revendications 1 à 4, **caractérisé en ce que** pour chaque unité locale (6) un élément de réception (19) est configuré comme une bobine d'induction et un élément d'émission (22) correspondant est configuré comme une bobine électromagnétique pour activer l'élément de réception (19) par un champ électromagnétique.

7. Système (1) de laboratoire selon quelques unes des revendications précédentes, **caractérisé en ce que** afin d'améliorer la fiabilité de la réception d'un signal individuel qui a été émise par une antenne (16) et reçue par une étiquette RFID (10) déterminée, les étiquettes RFID (10) individuelles et/ou les antennes (16) individuelles sont respectivement déparasitées les unes des autres.

8. Système (1) de laboratoire selon quelques unes des revendications précédentes, **caractérisé en ce que** la table de travail de laboratoire (3) comprend une couverture (23) faite d'acier et ayant des trous d'interconnexion (24) quels sont arrangés dans un arrangement correspondant aux points d'intersection de réseau du réseau (11), cependant au-dessous d'un trous d'interconnexion (24) respectivement un élément d'émission (22) est arrangé en registre avec un bouchon (25) qui ferme ce trou d'interconnexion(24), et cependant la surface (26) du bouchon (25) est configurée nette avec la surface (8) de la table de travail de laboratoire (3).

9. Système (1) de laboratoire selon quelques unes des revendications 1 à 7, **caractérisé en ce que** la surface (8) de la table de travail de laboratoire (3) comprend une couche de surface (27) faite de matière plastique, la couche de surface (27) comprenant des portions (28) optiquement transparentes au moins dans l'étendue des éléments d'émission (22), cependant les éléments d'émission (22) sont arrangés au-dessous de cette couche de surface (27) faite de matière plastique.

10. Système (1) de laboratoire selon quelques unes des revendications 1 à 4 ou 6 à 7, **caractérisé en ce que** la table de travail de laboratoire (3) comprend une couverture faite d'aluminium, cependant les éléments d'émission (22) sont configurés comme des émetteurs électromagnétiques et sont arrangés au-dessous de cette couverture en aluminium, et cependant la couverture en aluminium est transparente pour le champ électromagnétique des éléments d'émission (22).

11. Système (1) de laboratoire selon quelques unes des revendications précédentes, **caractérisé en ce que** l'équipement de laboratoire (4) est un processeur d'épreuve robotisé (RSP).

12. Système (1) de laboratoire selon quelques unes des revendications précédentes, **caractérisé en ce que** afin d'exciter les étiquettes RFID (10), l'unité locale (6) comprend au moins un élément d'émission optique pour émettre de l'énergie lumineuse, et **en ce que** afin de recevoir de l'énergie lumineuse, les étiquettes RFID (10) comprennent une photocellule ou sont en connexion opérative avec une photocellule.

13. Procédé pour identifier et localiser des objets (2) dans un système (1) de laboratoire, le procédé comprenant les étapes suivantes:
a) fournir des étiquettes de radio-identification (RFID) (10) sur des objets (2) à identifier et à localiser, cependant les étiquettes RFID (10) sont configurées pour recevoir et pour émettre des signaux;
b) fournir des supports (13) ou des châssis (14) pour loger des objets (2) à identifier et à localiser;
c) fournir d'une pluralité des antennes (16) quelles émettent des signaux aux étiquettes RFID (10) à localiser;
d) fournir au moins une unité quelle comprend un élément de réception (19) et un élément d'émission (2), cependant
l'élément de réception (19) est connecté aux antennes (16) et active les antennes (16) de façon qu'une étiquette RFID (10) est activée, l'étiquette RFID (10) étant positionnée près d'une antenne (16) quelle est activée par cet élément de réception (19) et émet à l'instant; et cependant
l'élément d'émission (22) émet de l'énergie à l'élément de réception (19) de l'unité;
e) fournir un ordinateur (7) et un transmetteur central (5), cependant le transmetteur central (5) est configuré au moins pour émettre des signaux à au moins un élément d'émission (22) et pour recevoir des signaux des étiquettes RFID (10) ainsi que pour convertir des signaux reçus et pour transmettre des signaux convertis à l'ordinateur (7), et cependant l'ordinateur (7) comprend un logiciel pour attribuer des identités et des positions des objets (2), le logiciel traitant des signaux transmis du transmetteur central (5);
**caractérisé en ce que** le système (1) est configuré comme un système de laboratoire, qui comprend un équipement de laboratoire (4) avec une table de travail de laboratoire (3), cependant des articles de laboratoire (15) à identifier et à localiser ainsi qu' le support (13) ou le châssis (14) peuvent être positionnés au-dessus d'une surface (8) de la table de travail de laboratoire (3) et cependant la table de travail de laboratoire (3) comprend un réseau virtuel (11) qui est configuré pour subdiviser la surface (8) de la table de travail de laboratoire (3) dans des unités de réseau (12);
**en ce que** l'unité est configurée comme une unité locale (6), quelle comprend au moins un élément de réception (19) et quelle est compris du support (13) ou du châssis (14);
**en ce que** des éléments d'émission (22) sont disposés au-dessous de la surface (8) de la table de travail de laboratoire (3) respectivement dans une position définie et ainsi définissent respectivement un point d'intersection de réseau du réseau (11);
**en ce qu'**un élément de réception (19) d'une unité locale (6) est disposé en registre au-dessus d'un élément d'émission (22), cependant l'élément d'émission (22) émet de l'énergie à travers la table de travail de laboratoire (3) à cet élément de réception (19);
**et en ce que** au moins une antenne (16) est compris d'un support (13) ou d'un châssis (14), ainsi qu'une seule étiquette RFID (10) d'un article de laboratoire (15) est activée individuellement, l'étiquette RFID (10) étant positionnée le plus proche d'une antenne (16) du support (13) ou du châssis (14), l'antenne (16) étant activée par cette élément de réception (19) et émet à l'instant.

14. Procédé selon la revendication 13, **caractérisé en ce que** afin de poursuivre des objets (2), l'activation des étiquettes RFID (10) seules et le traitement des signaux transmis est exécutée par l'ordinateur (7) avant et après le déplacement des objets (2).

15. Procédé selon la revendication 13 ou 14, **caractérisé en ce que** l'activation de l'élément de réception (19) est exécutée en utilisant de l'inductance électrique ou de l'excitation optique.

16. Procédé selon quelques unes des revendications 13 à 15, **caractérisé en ce que** des dispositifs de positionnement (17) sont utilisés pour tenir en position les supports (13) respectivement les châssis (14) sur la surface (8) de la table de travail de laboratoire (3).

17. Procédé selon quelques unes des revendications 13 à 16, **caractérisé en ce que** l'ordinateur (7) comprend un logiciel qui le rend capable de générer des plans de surface et des listes des objets (2) quels sont présents sur la table de travail de laboratoire (3).

18. Usage d'un système de laboratoire (1) selon quelques unes des revendications 1 à 12 ou d'un procédé selon quelques unes des revendications 13 à 17, **caractérisé en ce que** des données digitales quelles correspondent à des positions des objets (2) sur la surface (8) de la table de travail de laboratoire (3), sont mises à la disposition des systèmes logistiques supérieurs.
